# EUROPEAN PATENT SPECIFICATION

(11) **EP 3 543 278 B1**
(45) Date of publication and mention of the grant of the patent: **10.06.2026**
(21) Application number: 17871527.2
(22) Date of filing: 13.11.2017
(51) Int. Cl.: C08G 81/02, C08C 19/25, C08F 297/02, C08K 3/36, C08L 15/00, B60C 1/00, C08G 77/442

(54) **METHOD FOR PRODUCING CONJUGATED-DIENE-BASED RUBBER**
VERFAHREN ZUR HERSTELLUNG VON KAUTSCHUK AUF BASIS VON KONJUGIERTEM DIEN
PROCÉDÉ DE PRODUCTION DE CAOUTCHOUC À BASE DE DIÈNE CONJUGUÉ

(30) Priority: 16.11.2016 JP 2016223566
(43) Date of publication of application: 25.09.2019
(73) Proprietor: Zeon Corporation, Tokyo 100-8246 (JP)
(72) Inventor: SAKURAI, Takuro, Tokyo 100-8246 (JP)
(74) Representative: Maiwald GmbH
(86) International application number: PCT/JP2017/040757
(87) International publication number: WO 2018/092716

(56) References cited:
- WO-A1-2014/014052
- WO-A1-2016/208739
- CN-A- 103 848 940
- JP-A- 2007 500 281
- JP-A- 2008 518 086
- JP-A- 2009 179 754
- JP-A- 2012 193 277
- JP-A- 2017 082 235
- JP-A- 2017 082 236
- JP-A- 2017 110 230
- JP-A- 2017 133 026
- US-A1- 2013 090 427

## Description

### TECHNICAL FIELD

The present invention relates to a method of production of a conjugated diene rubber, more particularly relates to a method of production of a conjugated diene rubber able to give a cross-linked rubber excellent in hot flowability (resistance to mutual adhesion of coagulated crumbs) and excellent in low heat buildup and wet grip. Further, the present invention also relates to a method of production of a rubber composition containing the conjugated diene rubber and a method of production of a cross-linked rubber using the method of production of the conjugated diene rubber composition.

### BACKGROUND ART

In recent years, due to environmental issues and resource issues, strong demands have been placed on tires for automobile use for improving low fuel consumption. At the same time, excellent wet grip has been sought due to safety concerns. Cross-linked rubbers obtained by using a composition containing silica as a filler are superior to cross-linked rubbers obtained by using a composition containing carbon black in low heat buildup, so the rolling resistance when used for a tire becomes smaller. For this reason, by using cross-linked rubber obtained by using a composition containing silica to make tires, it is possible to obtain tires excellent in low fuel consumption.

However, even if adding silica to conventional rubber, the affinity of rubber and silica is insufficient, so these easily separate. Due to this, the processability of the rubber composition before cross-linking is poor. Further, the cross-linked rubber obtained by cross-linking this becomes insufficient in low heat buildup.

Therefore, to improve the affinity of rubber and silica, for example, it has been proposed to add various silane coupling agents such as disclosed in Patent Document 1 and Patent Document 2 to the rubber composition. However, advanced processing techniques are required for handling silane coupling agents and silane coupling agents are expensive, so if the amounts added become greater, there is the problem that tires will become higher in manufacturing costs.

To solve this problem, for example, as disclosed in Patent Document 3, Patent Document 4 and Patent Document 5, when using the solution polymerization method to obtain a rubber polymer, the technique of causing a modifying agent to react with the active end of the polymer chain so as to impart the affinity with silica to the rubber itself has been studied. For example, Patent Document 3 discloses the technique of causing the active end of a rubber polymer to react with a modifying agent comprised of a cyclic compound containing at least three siloxane units in a ring structure, and subsequently causing the resulting reacted product to react with an amine in which an active hydrogen atom is bound to an amino nitrogen atom, thereby obtaining an amine-functionalized rubber polymer.

The technique in Patent Document 3 improves the affinity between rubber and silica to some extent, and accordingly, the resulting cross-linked rubber is improved in low heat buildup and wet grip, but due to the growing demand for low consumption and wet grip on automobile tires in recent years, further improvement in low heat buildup and wet grip has been desired. Further, the rubber polymer obtained by the technique in Patent Document 1 does not have sufficient hot flowability, and thus has the problem that when a rubber polymer is recovered from a polymer solution by steam stripping or the like during production of the rubber polymer, coagulated crumbs of the rubber polymer mutually adhere, and consequently the rubber polymer becomes bulky, and thus adheres to the wall surface of a coagulation tank and a stirring blade, or causes clogging in a coagulated crumb transfer pipe, so that operations during coagulation are destabilized.

Other examples of modified conjugated diene-vinyl aromatic hydrocarbon copolymers are disclosed in Patent Documents 4 and 5. In the documents a conjugated diene polymer is first reacted with an epoxy functionalized polydimethylsiloxane and then with an amino-functionalized silane.

### RELATED ART DOCUMENTS

### PATENT DOCUMENTS

Patent Document 1: Japanese Patent Publication No. 2011-46640A
Patent Document 2: Japanese Patent Publication No. 2012-17291A
Patent Document 3: National Publication of International Patent Application No. 2008-518086
Patent Document 4: CN 103 848 940 A
Patent Document 5: WO 2016/208739 A1

### SUMMARY OF THE INVENTION

### PROBLEM TO BE SOLVED BY THE INVENTION

The present invention was studied in the light of the current circumstances, and has as its object the provision of a method of production of a conjugated diene rubber able to give cross-linked rubber excellent in hot flowability (resistance to mutual adhesion of coagulated crumbs) and excellent in low heat buildup and wet grip.

### MEANS FOR SOLVING THE PROBLEM

The present inventors engaged in intensive research to achieve the above object and as a result discovered that according to a conjugated diene rubber obtained by causing, as a modifying agent, a specific amount of specific polyorganosiloxane to react with a conjugated diene polymer chain having an active end, and subsequently causing, as a modifying agent, a compound having a group containing a nitrogen atom and a group which can react with a reaction residue produced by the reaction of the conjugated diene polymer chain having an active end with the polyorganosiloxane to react with the conjugated diene polymer chain with which polyorganosiloxane was reacted, it is possible to give a cross-linked rubber excellent in hot flowability and thus able to effectively prevent mutual adhesion of coagulated crumbs, and excellent in low heat buildup and wet grip. The present invention was completed based on this discovery.

Therefore, according to the present invention, there is provided a method of production of a conjugated diene rubber comprising a first step of polymerizing a monomer containing a conjugated diene compound in an inert solvent using a polymerization initiator so as to obtain a conjugated diene polymer chain having an active end, a second step of reacting polyorganosiloxane represented by the following general formula (1) with the conjugated diene polymer chain having an active end by adding the polyorganosiloxane at a ratio of 1 mole or more, when converted to the number of repeating units of the siloxane structure (-Si-O-) in the polyorganosiloxane, with respect to 1 mole of the polymerization initiator used in the first step, and a third step of reacting a compound represented by the following general formula (2) with the conjugated diene polymer chain with which polyorganosiloxane was reacted obtained in the second step: 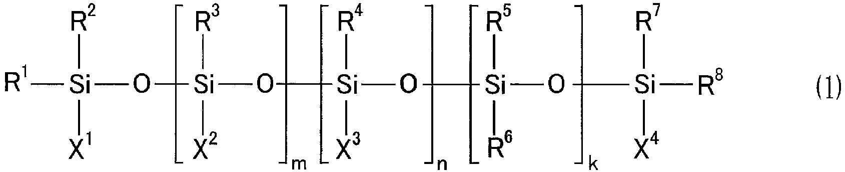 wherein, in the general formula (1), R¹ to R⁸ are an alkyl group having 1 to 6 carbon atoms, or an aryl group having 6 to 12 carbon atoms, these may be the same or may be different from each other; X¹ and X⁴ are any group selected from the group consisting of an alkyl group having 1 to 6 carbon atoms, aryl group having 6 to 12 carbon atoms, alkoxy group having 1 to 5 carbon atoms, and epoxy-group containing group having 4 to 12 carbon atoms, these may be the same or may be different from each other; X² is an epoxy-group containing group having 4 to 12 carbon atoms, and when there are a plural number of X², they may be the same or may be different from each other; X³ is a group containing 2 to 20 repeating units of alkylene glycol, and when there are a plural number of X³, they may be the same or may be different from each other; and "m" is an integer of 3 to 200, "n" is an integer of 0 to 200, "k" is an integer of 0 to 200, and m+n+k is 3 or more:

(A¹)₃-Si-A² (2)

wherein A¹ is a group represented by -OR¹⁰, wherein R¹⁰ is a hydrogen atom or a hydrocarbyl group, A² is a group containing a primary amino group having two active hydrogen atoms; and
wherein the polymerization initiator is at least one compound selected from the group consisting of an organic alkali metal compound, an organic alkali earth metal compound, and a polymerization initiator having a lanthanide-series metal compound as a primary catalyst.

In the method of production of the present invention, an organic alkali metal amide compound is preferably used as the polymerization initiator, and the organic alkali metal amide compound is more preferably a compound represented by the general formula (3). 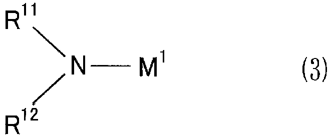 wherein, in the general formula (3), M¹ represents an alkali metal atom, R¹¹ and R¹² respectively independently represent an alkyl group, cycloalkyl group, aryl group, aralkyl group, a protecting group for amino group, or a group which produces a hydroxyl group when hydrolyzed, R¹¹ and R¹² may bond with each other to form a ring structure together with the nitrogen atom to which they are bound, when forming the ring structure they may form a ring structure together with a hetero atom other than the nitrogen atom to which they are bound in addition to the nitrogen atom to which they are bound.

In the method of production of the present invention, the first step preferably comprises a step of polymerizing a monomer containing isoprene, or isoprene and an aromatic vinyl compound, in an inert solvent using a polymerization initiator so as to form a polymer block (A) having an active end and containing 80 to 100 wt% of an isoprene monomer unit and 0 to 20 wt% of an aromatic vinyl monomer unit, and a step of mixing the polymer block (A) having an active end and a monomer containing 1,3-butadiene, or 1,3-butadiene and an aromatic vinyl compound, to continue polymerization reaction, and forming a polymer block (B) having an active end and containing 50 to 100 wt% of a 1,3-butadiene monomer unit and 0 to 50 wt% of an aromatic vinyl monomer unit in series with the polymer block (A) so as to obtain a conjugated diene polymer chain having an active end.

Further, according to the present invention, there is provided a method of production of a rubber composition comprising the production of a conjugated diene rubber by using the method of production according to the present invention, and compounding silica with the conjugated diene rubber, wherein the amount of silica in the rubber composition is 10 to 200 parts by weight with respect to 100 parts by weight of a rubber ingredient containing the conjugated diene rubber in the rubber composition.

According to the present invention, in the method of production of the rubber composition a cross-linking agent is preferably compounded with the silica and the conjugated diene rubber.

Further, according to the present invention, there are provided a method of production of a cross-linked rubber comprising the production of a rubber composition by using the method according to the present invention, and cross-linking the rubber composition;
and a method of production of a tire comprising the use of the method of production of the cross-linked rubber according to the present invention.

### EFFECTS OF THE INVENTION

According to the present invention, there are provided a method of production of a conjugated diene rubber able to give a cross-linked rubber excellent in hot flowability and thus able to effectively prevent mutual adhesion of coagulated crumbs, and excellent in low heat buildup and wet grip; a method of production of a rubber composition containing the conjugated diene rubber, a method of production of a cross-linked rubber excellent in low heat buildup and wet grip, comprising the production of a rubber composition by using the method of production of the present invention, and cross-linking the rubber composition; and, further, a method of production of a tire comprising the use of the method of production of the cross-linked rubber.

### DESCRIPTION OF EMBODIMENTS

### <Method of Production of Conjugated Diene Rubber>

The method of production of a conjugated diene rubber of the present invention comprises a first step of polymerizing a monomer containing a conjugated diene compound in an inert solvent using a polymerization initiator so as to obtain a conjugated diene polymer chain having an active end, a second step of reacting polyorganosiloxane represented by the later-described general formula (1) with the conjugated diene polymer chain having an active end by adding the polyorganosiloxane at a ratio of 1 mole or more, when converted to the number of repeating units of the siloxane structure (-Si-O-) in the polyorganosiloxane, to 1 mole of the polymerization initiator used in the first step, and a third step of reacting a compound represented by the later-described general formula (2) with the conjugated diene polymer chain with which polyorganosiloxane was reacted obtained in the second step.

### <First Step>

The first step of the method of production of the present invention is a step of polymerizing a monomer containing a conjugated diene compound in an inert solvent using a polymerization initiator so as to obtain a conjugated diene polymer chain having an active end.

In the first step of the method of production of the present invention, the conjugated diene compound used as the monomer to obtain the conjugated diene polymer chain having an active end is not particularly limited, but 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, 3-butyl-1,3-octadiene, etc. may be mentioned. Among these as well, 1,3-butadiene and isoprene are preferable. These conjugated diene compounds may be used as single type alone or may be used as two types or more combined.

Further, in the first step of the method of production of the present invention, an aromatic vinyl compound may be used together with the conjugated diene compound as the monomer used for the polymerization. As the aromatic vinyl compound used as the monomer, styrene, methylstyrene, ethylstyrene, t-butylstyrene, α-methylstyrene, α-methyl-p-methylstyrene, chlorostyrene, bromostyrene, methoxystyrene, dimethylamino methylstyrene, dimethylamino ethylstyrene, diethylamino methylstyrene, diethylamino ethylstyrene, cyano ethylstyrene, vinylnaphthalene, etc. may be mentioned. Among these as well, styrene is preferable. The conjugated diene polymer chain having an active end obtained in the first step of the method of production of the present invention contains preferably 50 to 100 wt%, more preferably 52 to 95 wt%, of a conjugated diene monomer unit, and further contains preferably 0 to 50 wt%, more preferably 5 to 48 wt%, of an aromatic vinyl monomer unit.

Further, in the first step of the method of production of the present invention, a compound able to copolymerize with the conjugated diene compound other than the aromatic vinyl compound may be used together with the conjugated diene compound. As the compound able to copolymerize with the conjugated diene compound, chain olefin compounds such as ethylene, propylene and 1-butene; cyclic olefin compounds such as cyclopentene and 2-norbornene; unconjugated diene compounds such as 1,5-hexadiene, 1,6-heptadiene, 1,7-octadiene, dicyclopentadiene, and 5-ethylidene-2-norbornene; (meth)acrylic acid esters such as methyl (meth)acrylate, ethyl (meth)acrylate and butyl (meth)acrylate; other (meth)acrylic acid derivatives such as (meth)acrylonitrile and (meth)acrylamide; etc. may be mentioned. These compounds able to copolymerize with the conjugated diene compound are contained, as the monomer unit, in preferably 10 wt% or less, more preferably 5 wt% or less, in the conjugated diene polymer chain having an active end obtained in the first step of the method of production of the present invention.

The inert solvent used for the polymerization is not particularly limited so long as solvent which is usually used in solution polymerization and does not detract from the polymerization reaction. As specific examples of the inert solvent, chain aliphatic hydrocarbons such as butane, pentane, hexane, and heptane; alicyclic hydrocarbons such as cyclopentane and cyclohexane; aromatic hydrocarbons such as benzene, toluene, and xylene; etc. may be mentioned. These inert solvents may be used as single type alone or as two or more types combined. The amount of use of the inert solvent is not particularly limited, but an amount in which the monomer concentration becomes, for example, 1 to 50 wt%, preferably 10 to 40 wt%.

The polymerization initiator used for polymerization is at least one compound selected from the group consisting of an organic alkali metal compound, organic alkali earth metal compound, and a polymerization initiator having a lanthanide-series metal compound as a primary catalyst. As the organic alkali metal compound, for example, organic monolithium compounds such as n-butyllithium, sec-butyllithium, t-butyllithium, hexyllithium, phenyllithium, and stilbenelithium; organic polyvalent lithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; etc. may be mentioned. Further, as the organic alkali earth metal compound, for example, di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, diethylaminobarium, barium distearate, diketylbarium, etc. may be mentioned. As the polymerization initiator having a lanthanide series metal compound as a primary catalyst, for example, a polymerization initiator having a salt of a lanthanide series metal comprised of a lanthanide series metal such as lanthanum, cerium, praseodymium, neodymium, samarium, and gadolinium and a carboxylic acid, phosphorus-containing organic acid, etc. as a primary catalyst and comprised of this and a co-catalyst such as an alkylaluminum compound, organic aluminum hydride compound, and organic aluminum halide compound, etc. may be mentioned. Among these polymerization initiators, organic monolithium compound and organic polyvalent lithium compound are preferably used, an organic monolithium compound is more preferably used, and n-butyllithium is particularly preferably used.

Note that, the organic alkali metal compound may be reacted in advance with a secondary amine compound such as dibutylamine, dihexylamine, dibenzylamine, pyrrolidine, piperidine, hexamethyleneimine, and heptamethyleneimine and be used as an organic alkali metal amide compound. By using an organic alkali metal amide compound as the polymerization initiator, the obtained cross-linked rubber can become one more excellent in low heat buildup and wet grip. These polymerization initiators may be used as single type alone or as two or more types combined.

As the organic alkali metal amide compound, for example, one obtained by reacting a secondary amine compound with an organic alkali metal compound, etc. may be mentioned. Among these as well, in the method of production of the present invention, the compound represented by the following general formula (3) can be preferably used.

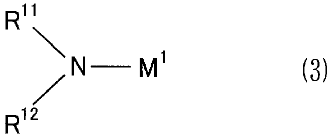

Wherein, in the general formula (3), M¹ represents an alkali metal atom, R¹¹ and R¹² respectively independently represent an alkyl group, cycloalkyl group, aryl group, aralkyl group, a protecting group for amino group, or a group which produces a hydroxyl group when hydrolyzed, R¹¹ and R¹² may bond with each other to form a ring structure together with the nitrogen atom to which they are bound, when forming the ring structure they may form a ring structure together with a hetero atom other than the nitrogen atom to which they are bound in addition to the nitrogen atom to which they are bound.

The alkyl group is not particularly limited, but preferably an alkyl group having 1 to 20 carbon atoms, more preferably an alkyl group having 1 to 10 carbon atoms. As the alkyl group, for example, methyl group, ethyl group, n-propyl group, isopropyl group, n-butyl group, isobutyl group, sec-butyl group, tert-butyl group, n-pentyl group, n-hexyl group, n-heptyl group, n-octyl group, n-decyl group, etc. may be mentioned.

The cycloalkyl group is not particularly limited, but preferably a cycloalkyl group having 3 to 20 carbon atoms, more preferably a cycloalkyl group having 3 to 12 carbon atoms. As the cycloalkyl group, for example, cyclopropyl group, cyclopentyl group, cyclohexyl group, cycloheptyl group, cyclooctyl group, cyclododecyl group, etc. may be mentioned.

The aryl group is not particularly limited, but preferably an aryl group having 6 to 12 carbon atoms, more preferably an aryl group having 6 to 10 carbon atoms. As the aryl group, for example, phenyl group, 1-naphthyl group, 2-naphthyl group, etc. may be mentioned.

The aralkyl group is not particularly limited, but preferably an aralkyl group having 7 to 13 carbon atoms, more preferably an aralkyl group having 7 to 9 carbon atoms. As the aralkyl group, for example, benzyl group, phenethyl group, etc. may be mentioned.

The protecting group for amino group is not particularly limited and may be any group capable of acting as a protecting group for amino group but, for example, an alkylsilyl group may be mentioned. As the alkylsilyl group, for example, trimethylsilyl group, triethylsilyl group, triphenylsilyl group, methyldiphenylsilyl group, ethylmethylphenylsilyl group, tert-butyldimethylsilyl group, etc. may be mentioned.

Note that when each of R¹¹ and/or R¹² is a protecting group for amino group, by removal of the protecting group for amino group, the structure where each of R¹³ and/or R¹⁴ in the general formula (5) to be described later is hydrogen atom can be introduced to one end of the polymer chain forming the obtained conjugated diene rubber.

The group which produces a hydroxyl group when hydrolyzed is not particularly limited and may be any group which produces a hydroxyl group when hydrolyzed in the presence of an acid but, for example, an alkoxyalkyl group and epoxy-group containing group may be mentioned.

As the alkoxyalkyl group, for example, methoxymethyl group, ethoxymethyl group, ethoxyethyl group, propoxymethyl group, butoxymethyl group, butoxyethyl group, propoxyethyl group, etc. may be mentioned.

Further, as the epoxy-group containing group, a group represented by the following general formula (4), etc. may be mentioned.

-Z¹-Z²-E¹ (4)

wherein, in the general formula (4), Z¹ represents an alkylene group or alkylarylene group having 1 to 10 carbon atoms, Z² represents a methylene group, sulfur atom or oxygen atom, and E¹ represents a glycidyl group.

Further, R¹¹ and R¹² may bond with each other to form a ring structure together with the nitrogen atom to which they are bound, and in such a case, specific examples of the structure formed by R¹¹ and R¹² together with the nitrogen atom to which they are bound include azetidine ring (R¹¹ and R¹² are propylene groups), pyrrolidine ring (R¹¹ and R¹² are butylene groups), piperidine ring (R¹¹ and R¹² are pentylene groups), hexamethyleneimine ring (R¹¹ and R¹² are hexylene groups), etc.
When R¹¹ and R¹² are bond with each other to form a ring structure together with the nitrogen atom to which they are bound, the ring structure is preferably a 4- to 8-member ring structure.

Further, in the general formula (3), M¹ is an alkali metal atom, and as the alkali metal atom, lithium atom, sodium atom, potassium atom, etc. may be mentioned, but among these as well, lithium atom is preferable from the viewpoint of polymerization activity.

In the first step of the method of production of the present invention, when the compound represented by the general formula (3) is used as the polymerization initiator, the amine structure forming an organic alkali metal amide compound remains in the state as bonded to the polymerization initiation end of the polymer chain. Accordingly, when the compound represented by the general formula (3) is used as the polymerization initiator, a structure represented by the following general formula (5) is introduced to one end of the polymer chain forming the obtained conjugated diene rubber. 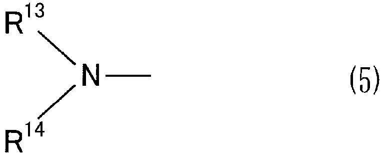 wherein, in the general formula (5), R¹³ and R¹⁴ respectively independently represent a hydrogen atom, alkyl group, cycloalkyl group, aryl group, aralkyl group, a protecting group for amino group, or a group which produces a hydroxyl group when hydrolyzed, R¹³ and R¹⁴ may bond with each other to form a ring structure together with the nitrogen atom to which they are bound, when forming the ring structure they may form a ring structure together with a hetero atom other than the nitrogen atom to which they are bound in addition to the nitrogen atom to which they are bound.

The alkyl group, cycloalkyl group, aryl group, aralkyl group, protecting group for amino group, or group which produces a hydroxyl group when hydrolyzed which may form R¹³ and R¹⁴ is the same as R¹¹ and R¹² in the general formula (3). Further, when R¹³ and R¹⁴ bond with each other to form a ring structure together with the nitrogen atom to which they are bound, they are the same as R¹¹ and R¹² in the general formula (3).
Note that the hydrogen atom which may form R¹³ and R¹⁴ is introduced by the removal of the protecting group for amino group.

In the method of production of the present invention, when an organic alkali metal amide compound is used as the polymerization initiator, the obtained conjugated diene rubber can have an amine structure at one end and a specific structure derived from the modifying agent at the other end. As a result, due to the effect of such an amine structure, the cross-linked rubber obtained by using the conjugated diene rubber can be more excellent in low heat buildup and wet grip.

The method of addition of an organic alkali metal amide compound as the polymerization initiator to the polymerization system is not particularly limited, but a method may be employed where a secondary amine compound is reacted with an organic alkali metal compound in advance to obtain an organic alkali metal amide compound, which is mixed with a monomer containing the conjugated diene compound to proceed the polymerization reaction. Alternatively, a method may also be employed where an organic alkali metal compound and a secondary amine compound are separately added to the polymerization system, mixed with a monomer containing the conjugated diene compound so as to produce an organic alkali metal amide compound in the polymerization system, thereby proceeding the polymerization reaction. The reaction conditions such as reaction temperature, etc. are not particularly limited and, for example, targeted polymerization reaction conditions may be followed.

The amount of use of the secondary amine compound may be determined in accordance with the targeted addition amount of the polymerization initiator, but is usually 0.01 to 1.5 mmoles with respect to 1 mmole of the organic alkali metal compound, preferably 0.1 to 1.2 mmoles, more preferably 0.5 to 1.0 mmole in range.

The amount of use of the polymerization initiator may be determined in accordance with the targeted molecular weight of the conjugated diene polymer chain, but is usually 1 to 50 mmoles with respect to 1000 g of the monomer, preferably 1.5 to 20 mmoles, more preferably 2 to 15 mmoles in range.

The polymerization temperature is usually -80 to +150°C, preferably 0 to 100°C, more preferably 30 to 90°C in range. As the polymerization process, a batch process, continuous process, or any other process can be employed, but when copolymerizing a conjugated diene compound and aromatic vinyl compound, the batch process is preferable in the point of facilitating control of the randomness of bonds between the conjugated diene monomer units and aromatic vinyl monomer units.

Further, in polymerization of a monomer containing a conjugated diene compound, to adjust the vinyl bond content in the conjugated diene monomer units in the obtained conjugated diene polymer chain, it is preferable to add a polar compound to the inert organic solvent. As the polar compound, for example, ether compounds such as dibutyl ether, tetrahydrofuran, 2,2-di(tetrahydrofuryl)propane; tertiary amines such as tetramethylethylenediamine; alkali metal alkoxides; phosphine compounds; etc. may be mentioned. Among these as well, an ether compound and a tertiary amine are preferable, a tertiary amine is more preferable, and tetramethylethylenediamine is particularly preferable. These polar compounds may be used as single type alone or as two or more types combined. The amount of use of the polar compound may be determined in accordance with the targeted vinyl bond content and is preferably 0.001 to 100 moles with respect to 1 mole of the polymerization initiator, more preferably 0.01 to 10 moles. If the amount of use of the polar compound is in this range, adjustment of the vinyl bond content in the conjugated diene monomer units is easy and the problem of deactivation of the polymerization initiator hardly ever arises.

The vinyl bond content in the conjugated diene monomer unit of the conjugated diene polymer chain having an active end obtained in the first step of the method of production of the present invention is preferably 1 to 90 wt%, more preferably 3 to 80 wt%, particularly preferably 5 to 70 wt%. By making the vinyl bond content in the conjugated diene monomer unit the above range, the obtained cross-linked rubber becomes more excellent in low heat buildup.

The weight average molecular weight (Mw) of the conjugated diene polymer chain having an active end obtained in the first step of the method of production of the present invention is not particularly limited, but the value measured by gel permeation chromatography converted to polystyrene is preferably 100,000 to 1,000,000, more preferably 150,000 to 700,000, particularly preferably 150,000 to 500,000. By making the weight average molecular weight (Mw) of the conjugated diene polymer chain having an active end the above range, wet grip and low heat buildup of the obtained cross-linked rubber become better balanced.

Further, the molecular weight distribution represented by the ratio (Mw/Mn) of the weight average molecular weight (Mw) and the number average molecular weight (Mn) of the conjugated diene polymer chain having an active end obtained in the first step of the method of production of the present invention is not particularly limited, but is preferably 1.0 to 3.0, more preferably 1.0 to 2.5. By making the molecular weight distribution (Mw/Mn) of the conjugated diene polymer chain having an active end the above range, the production of the conjugated diene rubber becomes easy.

Further, in the method of production of the present invention, it is preferable for the first step to be as follows for making the obtained cross-linked rubber more excellent in low heat buildup.
More specifically, it is preferable that the first step comprise a step of polymerizing a monomer containing isoprene, or isoprene and an aromatic vinyl compound, in an inert solvent using a polymerization initiator so as to form a polymer block (A) having an active end and containing 80 to 100 wt% of an isoprene monomer unit and 0 to 20 wt% of an aromatic vinyl monomer unit, and
a step of mixing the polymer block (A) having an active end and a monomer containing 1,3-butadiene, or 1,3-butadiene and an aromatic vinyl compound, to continue polymerization reaction, and forming a polymer block (B) having an active end and containing 50 to 100 wt% of a 1,3-butadiene monomer unit and 0 to 50 wt% of an aromatic vinyl monomer unit in series with the polymer block (A) so as to obtain a conjugated diene polymer chain having an active end.

By employing such a process, the conjugated diene polymer chain having an active end obtained in the first step can be made to include one formed of the polymer block (A) containing 80 to 100 wt% of isoprene monomer units, and 0 to 20 wt% of aromatic vinyl monomer units and the polymer block (B) containing 50 to 100 wt% of 1,3-butadiene monomer units and 0 to 50 wt% of aromatic vinyl monomer units in series.
Hereinafter, such an embodiment is described.

### [Polymer Block (A)]

The polymer block (A) in the conjugated diene polymer chain according to an embodiment of the present invention may be one so long as containing therein 80 to 100 wt% of isoprene monomer units and 0 to 20 wt% of aromatic vinyl monomer units, but one containing 85 to 95 wt% of isoprene monomer units and 5 to 15 wt% of aromatic vinyl monomer units is preferable, and one containing 89 to 95 wt% of isoprene monomer units and 5 to 11 wt% of aromatic vinyl monomer units is more preferable. With a content ratio of isoprene monomer unit and aromatic vinyl monomer unit being within the above range, when silica is added to the conjugated diene rubber, the affinity of conjugated diene rubber and silica becomes good and the low heat buildup of the cross-linked rubber obtained using this can be more enhanced.

As the aromatic vinyl compound used for forming the aromatic vinyl monomer unit contained in the polymer block (A), the same as those illustrated above as aromatic vinyl compounds can be used. Among these as well, styrene is preferable. Note that these aromatic vinyl compounds may be used as single type alone or may be used as two types or more combined.

The polymer block (A) is preferably comprised of substantially only isoprene monomer units, or isoprene monomer units and aromatic vinyl monomer units, but if desired other monomer units may be contained in addition to isoprene monomer units, or isoprene monomer units and aromatic vinyl monomer units. As the other compounds used for forming other monomer units, conjugated diene compounds other than isoprene such as 1,3-butadiene, 2,3-dimethyl-1,3-butadiene, 2-chloro-1,3-butadiene, 1,3-pentadiene, and 1,3-hexadiene; α,β-unsaturated nitriles such as acrylonitrile and methacrylonitrile; unsaturated carboxylic acids or acid anhydrides such as acrylic acid, methacrylic acid, and maleic anhydride; unsaturated carboxylic acid ester such as methyl methacrylate, ethyl acrylate, and butyl acrylate: unconjugated dienes such as 1,5-hexadiene, 1,6-heptadiene, 1,7-octadiene, dicyclopentadiene, and 5-ethylidene-2-norbornene; etc. may be mentioned. Among these as well, 1,3-butadiene is preferable. These other monomers may be used as single type alone or as two or more types combined. In the polymer block (A), the content ratio of other monomer units is preferably 20 wt% or less, more preferably 10 wt% or less, further preferably 6 wt% or less.

In the present invention, the polymer block (A) in the conjugated diene polymer chain is formed by polymerizing a monomer containing isoprene, or isoprene and an aromatic vinyl compound, in an inert solvent using a polymerization initiator. As a result, the formed polymer block (A) has an active end.

For forming the polymer block (A), as the inert solvent used for polymerizing a monomer containing isoprene, or isoprene and an aromatic vinyl compound, the same as those illustrated above as inert solvents can be used. The amount of use of the inert solvent is an amount in which the monomer concentration becomes preferably 1 to 80 wt%, preferably 10 to 50 wt%.

The polymerization initiator used for forming the polymer block (A) is not particularly limited so long as one able to polymerize a monomer containing isoprene, or isoprene and an aromatic vinyl compound, and give a polymer chain having an active end. As specific examples thereof, the same as those illustrated above as the polymerization initiator can be used.

The amount of use of the polymerization initiator may be determined in accordance with the targeted molecular weight, but is preferably 4 to 250 mmoles with respect to 100 g of the monomer containing isoprene, or isoprene and an aromatic vinyl compound, more preferably 6 to 200 mmoles, particularly preferably 10 to 70 mmoles in range.

The polymerization temperature when polymerizing a monomer containing isoprene, or isoprene and an aromatic vinyl compound, is preferably -80 to +150°C, more preferably 0 to 100°C, further preferably 20 to 90°C in range. As the polymerization process, a batch process, continuous process, or any other process can be employed. Additionally, the type of bond may, for example, be made various types of bonds such as a block type, taper type, and random type.

Further, in the method of production according to an embodiment of the present invention, to adjust the vinyl bond content in isoprene monomer units in the polymer block (A), it is preferable to add a polar compound to the inert solvent when polymerizing. As the polar compound, the same as those illustrated above as polar compounds can be used. The amount of use of the polar compound may be determined in accordance with the targeted vinyl bond content and is preferably 0.01 to 30 moles with respect to 1 mole of the polymerization initiator, more preferably 0.05 to 10 moles. If the amount of use of the polar compound is in the above range, adjustment of the vinyl bond content in the isoprene monomer units is easy and the problem of deactivation of the polymerization initiator hardly ever arises. Additionally, the vinyl bond content in isoprene monomer units can be increased by increasing the amount of use of the polar compound within the above range.

The vinyl bond content in isoprene monomer units in the polymer block (A) is preferably 5 to 90 wt%, more preferably 5 to 80 wt%. By making the vinyl bond content in isoprene monomer units within the above range, low heat buildup of the obtained cross-linked rubber can be more enhanced. Note that, in the present Description, the vinyl bond content in isoprene monomer units refers to the ratio of total amount of 1,2-structured isoprene monomer units and 3,4-structured isoprene monomer units in isoprene monomer units.

The weight average molecular weight (Mw) of the polymer block (A) as the value measured by gel permeation chromatography converted to polystyrene is preferably 500 to 15,000, more preferably 1,000 to 12,000, particularly preferably 1,500 to 10,000. When the weight average molecular weight of the polymer block (A) is within the above range, low heat buildup of the obtained cross-linked rubber can be more enhanced.

Further, the molecular weight distribution represented by the ratio (Mw/Mn) of the weight average molecular weight (Mw) and the number average molecular weight (Mn) of the polymer block (A) is preferably 1.0 to 1.5, more preferably 1.0 to 1.3. When a value (Mw/Mn) of the molecular weight distribution of the polymer block (A) is within the above range, the production of the conjugated diene rubber becomes easy.

### [Polymer Block (B)]

The polymer block (B) in the conjugated diene polymer chain according to an embodiment of the present invention may be one so long as containing therein 50 to 100 wt% of 1,3-butadiene monomer units and 0 to 50 wt% of aromatic vinyl monomer units, but one containing 52 to 95 wt% of 1,3-butadiene monomer units and 5 to 48 wt% of aromatic vinyl monomer units is preferable. With a content ratio of 1,3-butadiene monomer units and aromatic vinyl monomer units being within the above range, the production of the conjugated diene rubber becomes easy.

As the aromatic vinyl compound used for forming the aromatic vinyl monomer unit contained in the polymer block (B), the same as those illustrated above as aromatic vinyl compounds can be used, and among these as well, styrene is preferable.

The polymer block (B) is preferably comprised of substantially only 1,3-butadiene monomer units, or 1,3-butadiene monomer units and aromatic vinyl monomer units, but if desired other monomer units may be contained in addition to 1,3-butadiene monomer units, or 1,3-butadiene monomer units and aromatic vinyl monomer units, within a range not impairing the essential feature of the present invention. As the other monomers used for forming other monomer units, the same as those illustrated above as compounds (provided that 1,3-butadiene is excluded) in the polymer block (A) can be used. Further, in the polymer block (B), isoprene can also be used as the other monomers. In the polymer block (B), the content ratio of other monomer units is preferably 50 wt% or less, more preferably 40 wt% or less, further preferably 35 wt% or less.

In an embodiment of the present invention, the polymer block (B) in the conjugated diene polymer chain is formed in series with the polymer block (A) by mixing the polymer block (A) having an active end described above and a monomer containing 1,3-butadiene, or 1,3-butadiene and an aromatic vinyl compound, to cause the polymerization reaction to continue. The formed polymer block (B) has an active end. On the other hand, the active end is eliminated from the polymer block (A).

For forming the polymer block (B), as the inert solvent used for polymerizing the polymer block (A) and a monomer containing 1,3-butadiene, or 1,3-butadiene and an aromatic vinyl compound, is not particularly limited, and the same as those illustrated above as inert solvents can be used.

The amount of use of the polymer block (A) having an active end when forming the polymer block (B) may be determined in accordance with the targeted molecular weight, but is preferably 0.1 to 5 mmoles with respect to 100 g of the monomer containing 1,3-butadiene, or 1,3-butadiene and an aromatic vinyl compound, more preferably 0.15 to 2 mmoles, further preferably 0.2 to 1.5 mmoles in range.

The method of mixing the polymer block (A) and a monomer containing 1,3-butadiene, or 1,3-butadiene and an aromatic vinyl compound, is not particularly limited. The polymer block (A) having an active end may be added to a solution of a monomer containing 1,3-butadiene, or 1,3-butadiene and an aromatic vinyl compound, or a monomer containing 1,3-butadiene, or 1,3-butadiene and an aromatic vinyl compound, may be added to a solution of the polymer block (A) having an active end. In the light of controlling the polymerization, the method of adding the polymer block (A) having an active end to a solution of a monomer containing 1,3-butadiene, or 1,3-butadiene and an aromatic vinyl compound is preferable.

The polymerization temperature when polymerizing a monomer containing 1,3-butadiene, or 1,3-butadiene and an aromatic vinyl compound, is preferably -80 to +150°C, more preferably 0 to 100°C, further preferably 20 to 90°C in range. As the polymerization process, a batch process, continuous process, or any other process can be employed, but when making the polymer block (B) a copolymer chain, the batch process is preferable in the point of facilitating control of the randomness of bonds.

The type of bond at each monomer when making the polymer block (B) a copolymer chain may, for example, be made various types of bonds such as a block type, taper type, and random type, but a random bond type is preferable. By making it a random type, low heat buildup of the obtained cross-linked rubber can be more enhanced. Note that, when the type of bond at 1,3-butadiene and an aromatic vinyl compound is a random type, it is preferable to supply 1,3-butadiene, or 1,3-butadiene and an aromatic vinyl compound sequentially or continuously to the polymerization system to carry out polymerization so that the ratio of aromatic vinyl compound to the total amount of 1,3-butadiene and an aromatic vinyl compound does not become too high in the polymerization system.

Further, in an embodiment of the present invention, to adjust the vinyl bond content in 1,3-butadiene monomer units in the polymer block (B), it is preferable to add a polar compound to the inert solvent when polymerizing as in adjustment of the vinyl bond content in isoprene monomer units in the polymer block (A). However, when a polar compound in an amount sufficient to adjust the vinyl bond content in 1,3-butadiene monomer units in the polymer block (B) is added to an inert solvent during preparation of the polymer block (A), a polar compound does not need to be newly added. As the polar compound used for adjusting the vinyl bond content, the same as those illustrated above as polar compounds can be used. The amount of use of the polar compound may be determined in accordance with the targeted vinyl bond content and is preferably 0.01 to 100 moles with respect to 1 mole of the polymerization initiator used for the first polymerization reaction (polymerization reaction for forming the first polymer block (A)), and the adjustment may be made more preferably in a range from 0.1 to 30 moles. If the amount of use of the polar compound is in this range, adjustment of the vinyl bond content in 1,3-butadiene monomer units is easy and the problem of deactivation of the polymerization initiator hardly ever arises.

The vinyl bond content in 1,3-butadiene monomer units in the polymer block (B) is preferably 1 to 90 wt%, more preferably 3 to 80 wt%, particularly preferably 5 to 70 wt%. By making the vinyl bond content in 1,3-butadiene monomer units in the polymer block (B) within this range, the obtained cross-linked rubber can be more excellent in low heat buildup.

In this way, the conjugated diene polymer chain having an active end and containing a polymer block (A) and a polymer block (B) can be obtained. In an embodiment of the present invention, the conjugated polymer chain having an active end is preferably formed by the polymer block (A)-polymer block (B) and has an active end at the end of the polymer block (B) in view of productivity, but may be those having a plurality of the polymer blocks (A) or those further having other polymer blocks. For example, a conjugated diene polymer chain having an active end such as the polymer block (A)-polymer block (B)-polymer block (A), etc. may be mentioned. In this case, an active end is formed at the end of a polymer block (A) formed subsequently to the polymer block (B). When the polymer block (A) is formed at the active end side of the conjugated diene polymer chain, the amount of use of isoprene is preferably 10 to 100 moles with respect to 1 mole of the polymerization initiator used for the first polymerization reaction (polymerization reaction for forming the first polymer block (A)), more preferably 15 to 70 moles, particularly preferably 20 to 35 moles.

In the conjugated diene polymer chain having an active end obtained in an embodiment of the present invention, the weight ratio of the polymer block (A) to the polymer block (B) (when a plurality of the polymer blocks (A) and polymer blocks (B) are present, the weight ratio is based on each total amount) is preferably 0.001 to 0.1, more preferably 0.003 to 0.07, particularly preferably 0.005 to 0.05 in terms of (weight of polymer block (A))/(weight of polymer block (B)). By making the weight ratio of the polymer block (A) to the polymer block (B) within the above range, wet grip and low heat buildup of the obtained cross-linked rubber become better balanced.

The content ratio of the total monomer unit of isoprene monomer units and 1,3-butadiene monomer units and the content ratio of aromatic vinyl monomer units in the conjugated diene polymer chain having an active end and containing a polymer block (A) and a polymer block (B) is, in the conjugated diene polymer chain having an active end, preferably 50 to 100 wt% of the total monomer unit of isoprene monomer units and 1,3-butadiene monomer units, and 0 to 50 wt% of aromatic vinyl monomer units, more preferably 52 to 95 wt% of the total monomer unit of isoprene monomer units and 1,3-butadiene monomer units, and 5 to 48 wt% of aromatic vinyl monomer units. Further, the vinyl bond content in isoprene monomer units and 1,3-butadiene monomer units in the conjugated diene polymer chain having an active end and containing a polymer block (A) and a polymer block (B) is preferably within the same range as the vinyl bond content in 1,3-butadiene monomer units in the polymer block (B) described above.

### <Second Step>

The second step of method of production of the present invention is a step of reacting polyorganosiloxane represented by the following general formula (1) with the conjugated diene polymer chain having an active end obtained in the first step by adding the polyorganosiloxane at a ratio of 1 mole or more, when converted to the number of repeating units of the siloxane structure (-Si-O-) in polyorganosiloxane, to 1 mole of the polymerization initiator used in the first step 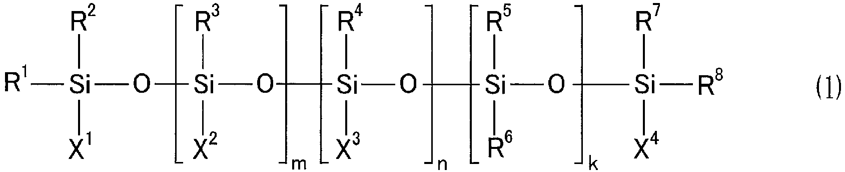 wherein, in the general formula (1), R¹ to R⁸ are an alkyl group having 1 to 6 carbon atoms, or an aryl group having 6 to 12 carbon atoms, these may be the same or may be different from each other; X¹ and X⁴ are any group selected from the group consisting of an alkyl group having 1 to 6 carbon atoms, aryl group having 6 to 12 carbon atoms, alkoxy group having 1 to 5 carbon atoms, and epoxy-group containing group having 4 to 12 carbon atoms, these may be the same or may be different from each other; X² is an epoxy-group containing group having 4 to 12 carbon atoms, and when there are a plural number of X², they may be the same or may be different from each other. X³ is a group containing 2 to 20 repeating units of alkylene glycol, and when there are a plural number of X³, they may be the same or may be different from each other. "m" is an integer of 3 to 200, "n" is an integer of 0 to 200, "k" is an integer of 0 to 200, and m+n+k is 3 or more.

In the polyorganosiloxane represented by the general formula (1), as the alkyl group having 1 to 6 carbon atoms which may form R¹ to R⁸, X¹ and X⁴ in the general formula (1), for example, methyl group, ethyl group, n-propyl group, isopropyl group, butyl group, pentyl group, hexyl group, cyclohexyl group, etc. may be mentioned. As the aryl group having 6 to 12 carbon atoms, for example, phenyl group, methylphenyl group, etc. may be mentioned. Among these as well, methyl group and ethyl group are preferable in the point of easy production of polyorganosiloxane itself.

Further, in the polyorganosiloxane represented by the general formula (1), as the alkoxy group having 1 to 5 carbon atoms which may form X¹ and X⁴, for example, methoxy group, ethoxy group, propoxy group, isopropoxy group, butoxy group, etc. may be mentioned. Among these as well, methoxy group and ethoxy group are preferable in the point of easy production of polyorganosiloxane itself.

Furthermore, in the polyorganosiloxane represented by the general formula (1), as the epoxy-group containing group having 4 to 12 carbon atoms which forms X² and may form X¹ and X⁴, for example, a group represented by the following general formula (6) may be mentioned.

-Z³-Z⁴-E² (6)

wherein, in the general formula (6), Z³ represents an alkylene group or alkylarylene group having 1 to 10 carbon atoms, Z⁴ represents methylene group, sulfur atom or oxygen atom, and E² represents a hydrocarbon group having an epoxy group and 2 to 10 carbon atoms.

The group represented by the general formula (6) is preferably one where Z⁴ is an oxygen atom, more preferably one where Z⁴ is an oxygen atom and E² is a glycidyl group, particularly preferably one where Z³ is an alkylene group having 1 to 3 carbon atoms, Z⁴ is an oxygen atom and E² is a glycidyl group.

Further, in the polyorganosiloxane represented by the general formula (1), X¹ and X⁴ are preferably, of the above, an epoxy-group containing group having 4 to 12 carbon atoms or an alkyl group having 1 to 6 carbon atoms. Further, X² is an epoxy-group containing group having 4 to 12 carbon atoms. Further, it is more preferable that X¹ and X⁴ be an alkyl group having 1 to 6 carbon atoms.

Further, in the polyorganosiloxane represented by the general formula (1), X³, that is, the group containing repeating units of 2 to 20 alkylene glycol, is preferably a group represented by the following general formula (7). 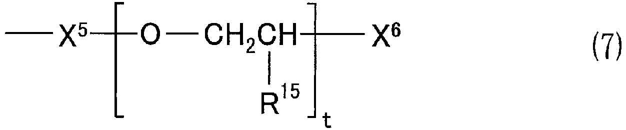 Wherein, in the general formula (7), "t" is an integer of 2 to 20, X⁵ is an alkylene group or alkylarylene group having 2 to 10 carbon atoms, R¹⁵ is hydrogen atom or methyl group, and X⁶ is an alkoxy group or aryloxy group having 1 to 10 carbon atoms. Among these as well, one where "t" is an integer of 2 to 8, X⁵ is an alkylene group having 3 carbon atoms, R¹⁵ is hydrogen atom, and X⁶ is methoxy group.

In the polyorganosiloxane represented by the general formula (1), "m" is an integer of 3 to 200, preferably an integer of 20 to 150, more preferably an integer of 30 to 120. When "m" is 3 or more, the obtained conjugated diene rubber has a high coupling rate, and as a result is excellent in hot flowability. Further, when "m" is 200 or less, the polyorganosiloxane represented by the general formula (1) itself is more easily produced and the viscosity thereof does not become too high, resulting in easy handling.

Further, in the polyorganosiloxane represented by the general formula (1), "n" is an integer of 0 to 200, preferably an integer of 0 to 150, more preferably an integer of 0 to 120. "k" is an integer of 0 to 200, preferably an integer of 0 to 150, more preferably an integer of 0 to 130. The total number of "m", "n" and "k" is 3 or more, preferably 3 to 400, more preferably 20 to 300, particularly preferably 30 to 250. When the total number of "m", "n" and "k" is 3 or more, the reaction of the polyorganosiloxane represented by the general formula (1) and the conjugated diene polymer chain having an active end easily proceeds, and further the total number of "m", "n" and "k" is 400 or less, the polyorganosiloxane represented by the general formula (1) itself is easily produced and the viscosity thereof does not become too high, resulting in easy handling.

The amount of use of polyorganosiloxane in the second step of the method of production of the present invention is, when converted to the number of repeating units of the siloxane structure (-Si-O-) in polyorganosiloxane, 1 mole or more, preferably 1 to 2.5 moles, more preferably 1.1 to 2 moles, with respect to 1 mole of the polymerization initiator used for the polymerization in the first step described above.

It is preferable that the amount of use of polyorganosiloxane, when converted to number of repeating units of the siloxane structure (-Si-O-), be 1 mole or more with respect to 1 mole of the polymerization initiator because substantially all active ends, among the active ends of the conjugated diene polymer chain having an active end obtained in the first step, can be reacted with polyorganosiloxane. That is, an alkyl metal group as an active end, i.e. a group represented by -R⁻M⁺ (R is a hydrocarbon group forming a polymer chain end and M is an alkali metal atom, an alkaline earth metal atom or a lanthanide-series metal atom), of the conjugated diene polymer chain having an active end obtained in the first step, can be substantially prevented from remaining.

Accordingly, in reaction of a compound represented by the general formula (2) in the later-described third step, the compound represented by the general formula (2) can be substantially inhibited from directly reacting with an active end of the conjugated diene polymer chain having an active end obtained in the first step. As a result, a compound represented by the general formula (2) can be properly reacted with a reaction residue produced by reaction of the conjugated diene polymer chain with polyorganosiloxane represented by the general formula (1). Accordingly, a modified structure by a compound represented by the general formula (2), via a structure derived from polyorganosiloxane represented by the general formula (1), can be properly introduced into the conjugated diene polymer chain, and effects by introducing such a modified structure, i.e. excellent hot flowability (resistance to mutual adhesion of coagulated crumbs), low heat buildup and wet grip can be attained.

The method of making polyorganosiloxane react with the conjugated diene polymer chain having an active end is not particularly limited, but the method of mixing these in a solvent able to dissolve the same, etc. may be mentioned. As the solvent used at this time, the same as those illustrated as inert solvents used in the first step described above can be used. Further, at this time, the method of adding polyorganosiloxane to the polymerization solution used for the polymerization for obtaining the conjugated diene polymer chain having an active end is simple and preferable. Further, at this time, polyorganosiloxane is preferably dissolved in an inert solvent and then added to the polymerization system. The solution concentration is preferably 1 to 50 wt% in range. The reaction temperature is not particularly limited, but is usually 0 to 120°C. The reaction time is also not particularly limited, but is usually 1 minute to 1 hour.

The timing for adding polyorganosiloxane to the solution containing the conjugated diene polymer chain having an active end is not particularly limited, but it is preferable to add polyorganosiloxane to this solution in the state where the polymerization reaction is not completed and the solution containing the conjugated diene polymer chain having an active end which also contains a monomer, more specifically, in the state where the solution containing the conjugated diene polymer chain having an active end contains 100 ppm or more of monomer, more preferably 300 to 50,000 ppm of monomer. By adding polyorganosiloxane in this way, it becomes possible to suppress secondary reactions between the conjugated diene polymer chain having an active end and impurities, etc. contained in the polymerization system and to control the reaction well.

In the second step of the method of production of the present invention, polyorganosiloxane as the modifying agent is made to react with the active end of the conjugated diene polymer chain having an active end obtained in the first step described above, and part of the active end of the conjugated diene polymer chain reacts with an epoxy group forming X² contained essentially in the general formula (1)) on the side chain of polyorganosiloxane. According to the second step of the method of production of the present invention, a modified structure by siloxane is introduced into the conjugated diene polymer chain by such reaction.

Specifically, it is considered that when the active end of the conjugated diene polymer chain reacts with an epoxy group of the side chain of polyorganosiloxane, the epoxy group is opened to form a new bond between a carbon atom at a part where the epoxy group is opened and the active end of the conjugated diene polymer chain, a siloxane structure is introduced into the end of the conjugated diene polymer chain, and an oxygen atom in the epoxy group and a metal atom forming the active end of the conjugated diene polymer chain form, as a reaction residue thereof, a group represented by -O⁻M⁺. When the active end of the conjugated diene polymer chain reacts with an alkoxide group of the side chain of polyorganosiloxane, the alkoxy group is eliminated, the conjugated diene polymer chain forms a new bond between the siloxane atom in the siloxane structure and the active end of the conjugated diene polymer chain, and a siloxane structure is introduced into the end of the conjugated diene polymer chain.

In particularly, in the second step of the method of production of the present invention, the amount of use of polyorganosiloxane is 1 mole or more, when converted to the number of repeating units of the siloxane structure (-Si-O-) in polyorganosiloxane, with respect to 1 mole of the polymerization initiator, and therefore a modified structure by siloxane can be introduced into almost all conjugated diene polymer chains among the conjugated diene polymer chains having an active end obtained in the first step. Thus, almost all of the alkyl metal group as the active end of the conjugated diene polymer chain having an active end obtained in the first step, i.e. -R-M⁺, can be prevented from remaining, and in place thereof, a group represented by -O⁻M⁺ is formed as a reaction residue. However, in the present invention, a conjugated diene polymer chain having an unmodified active end which is not modified by siloxane may be contained in a very small amount (e.g. 5 wt% or less) (i.e. a conjugated diene polymer chain in which an alkyl metal group as the active end of the conjugated diene polymer chain having an active end obtained in the first step, i.e. -R-M⁺, remains may be contained in a very small amount), and such a case is not excluded.

Note that, in the second step of the method of production of the present invention, when in the state before making polyorganosiloxane represented by the general formula (1) react with the conjugated diene polymer chain having an active end, a conventionally normally used coupling agent or modifying agent, etc. may be added to the polymerization system for coupling or modifying part of the active end of the conjugated diene polymer chain having an active end within a range not impairing the effect of the present invention.

### <Third Step>

The third step of the method of production of the present invention is a step of reacting a compound represented by the following general formula (2) with the conjugated diene polymer chain with which polyorganosiloxane was reacted obtained in the second step:

(A¹)₃-Si-A² (2)

wherein, in the general formula (2), A¹ is a group represented by - OR¹⁰, wherein R¹⁰ is a hydrogen atom or a hydrocarbyl group, A² is a group containing a primary amino group having two active hydrogen atoms.

According to the present invention, in the second step described above, almost all of the alkyl metal group as the active end of the conjugated diene polymer chain having an active end obtained in the first step, i.e. -R⁻M⁺, is prevented from remaining, and in place thereof, a group represented by -O⁻M⁺ as a reaction residue by reaction with polyorganosiloxane represented by the general formula (1) is present, so that according to the third step of the present invention, a compound represented by the general formula (2) can be properly reacted with such a group represented by -O⁻M⁺ as a reaction residue (including a group where a group represented by -O⁻M⁺ is hydrolyzed and converted to a hydroxyl group)

That is, according to the present invention, a situation in which a compound represented by the general formula (2) reacts with a group represented by -R-M⁺, and consequently a modified structure by the compound represented by the general formula (2) is directly introduced into the conjugated diene polymer chain can be properly inhibited, and accordingly, a modified structure by the compound represented by the general formula (2), via a structure derived from polyorganosiloxane represented by the general formula (1), can be properly introduced into the conjugated diene polymer chain. As a result, the conjugated diene rubber obtained by the method of production of the present invention can be made able to give a cross-linked rubber excellent in hot flowability (resistance to mutual adhesion of coagulated crumbs) and excellent in low heat buildup and wet grip.

However, the conjugated diene polymer chain with which polyorganosiloxane was reacted used in the third step of the method of production of the present invention may be one so long as it underwent the second step described above, the conjugated diene polymer chain having an unmodified active end at which a siloxane-modified structure is not introduced may remain in a very small amount (e.g. 5 wt% or less) in addition to the conjugated diene polymer chain in which a modified structure by siloxane is introduced (i.e. one in which an alkyl metal group as the active end of the conjugated diene polymer chain having an active end obtained in the first step, i.e. -R⁻M⁺ remains, may be included in a very small amount), and further, one in which part of -O⁻M⁺ as a reaction residue which was formed as a result of introduction of a modified structure by siloxane is hydrolyzed, and converted to a hydroxyl group, may be included.

In the compound represented by the general formula (2), A¹ in the general formula (2) is a group which can react with a reaction residue (typically a group represented by -O⁻M⁺) produced by reaction of the conjugated diene polymer chain having an active end with polyorganosiloxane, and is a group represented by -OR¹⁰, wherein R¹⁰ is a hydrogen atom or a hydrocarbyl group. As the hydrocarbyl group which can constitute R¹⁰, for example, an alkyl group, a cycloalkyl group, an alkynyl group, an aryl group, an aralkyl group, etc. may be mentioned, but an alkyl group having 1 to 6 carbon atoms is preferable in view of reactivity with the reaction residue described above. As the alkyl group having 1 to 6 carbon atoms, methyl group, ethyl group, n-propyl group, iso propyl group, butyl group, pentyl group, hexyl group, etc. may be mentioned, and among these, methyl group and ethyl group are more preferable.

In the compound represented by the general formula (2), A² in the general formula (2) is a group containing a primary amino group having two active hydrogen atoms, and for example, 3-aminopropyl group, 4-aminobutyl group, 3-(2-aminoethylamino)propyl group, etc. may be mentioned. 3-aminopropyl group, 4-aminobutyl group, and 3-(2-aminoethylamino)propyl group are preferable in view of further improvement of low heat buildup and wet grip of the obtained cross-linked rubber. Note that the "active hydrogen atom" means a hydrogen atom bound to an atom other than a carbon atom, and preferably has binding energy lower than that of the carbon-hydrogen bond of a polymethylene chain.

A plural number of groups represented by A¹ contained in one molecule of the compound represented by the general formula (2) may be the same or different from each other.

Specific examples of the compound represented by the general formula (2) can be, for example, compounds having 3-aminopropyl group as A², such as 3-aminopropyltrimethoxysilane and 3-aminopropyltriethoxysilane; compounds having 4-aminobutyl group as A², such as 4-aminobutyltrimethoxysilane and 4-aminobutyltriethoxysilane; and compounds having 3-(2-aminoethylamino)propyl group as A², such as 3-(2-aminoethylamino)propyltrimethoxysilane and 3-(2-aminoethylamino)propyltriethoxysilane.

The amount of use of the compound represented by the general formula (2) is not particularly limited, but is preferably 0.1 to 5 moles, more preferably 0.2 to 2 moles, still more preferably 0.4 to 1.5 moles with respect to 1 mole of the polymerization initiator used in the first step. When the amount of use of the compound represented by the general formula (2) is in the above range, a cross-linked rubber more excellent in low heat buildup and wet grip can be obtained.

The timing for adding the compound represented by the general formula (2) to the solution containing the conjugated diene polymer chain is not particularly limited as long as the compound is added after addition of polyorganosiloxane represented by the general formula (1) in the second step described above. For example, as in the second step described above, the compound represented by the general formula (2) can be added to this solution in the state where the polymerization reaction is not completed and the solution containing the conjugated diene polymer chain also contains a monomer, more specifically, in the state where the solution containing the conjugated diene polymer chain contains 100 ppm or more of monomer, more preferably 300 to 50,000 ppm of monomer. By adding the compound represented by the general formula (2) in this way, it becomes possible to suppress secondary reactions of the conjugated diene polymer chain with impurities, etc. contained in the polymerization system and to control the reaction well. Alternatively, a modification reaction may be carried out in the state where before or after the compound represented by the general formula (2) is added to the solution containing conjugated diene polymer chain, by adding water or an alcohol such as methanol to this solution, the group represented by -O⁻M⁺ as a reaction residue formed by reaction with polyorganosiloxane represented by the general formula (1) is hydrolyzed and converted to a hydroxyl group. When the compound represented by the general formula (2) is added to the solution containing the conjugated diene polymer chain, the compound represented by the general formula (2) may be added after the compound is dissolved in an inert solvent, or may be directly added without being dissolved in an inert solvent. The reaction temperature and the reaction time are the same as in the first step.

The compound represented by the general formula (2) is reacted, a known polymerization terminator etc. is then added as necessary to deactivate the reaction system, an antiaging agent such as phenol-based stabilizing agent, phosphorus-based stabilizing agent, and sulfur-based stabilizing agent, crumb forming agent, and scale inhibitor, etc. may be added to the reaction solution, if desired, subsequently, the polymerization solvent is separated from the reaction solution by direct drying or steam stripping to collect the conjugated diene rubber. Note that before separating the polymerization solvent from the reaction solution, an oil extender may be mixed with the polymerization solution to collect the conjugated diene rubber as an oil extended rubber.

As the oil extender used for collecting the conjugated diene rubber as an oil extended rubber, for example, a paraffin-based, aromatic-based, and naphthene-based oil-based softening agent, plant-based softening agent, fatty acid, etc. may be mentioned. When using the oil-based softening agent, the content of the polycyclic aromatic compound extracted by the method of IP346 (test method of THE INSTITUTE PETROLEUM of the U.K.) is preferably less than 3%. When using an oil extender, the amount of use is preferably 5 to 100 parts by weight with respect to 100 parts by weight of the conjugated diene rubber, more preferably 10 to 60 parts by weight, further preferably 20 to 50 parts by weight.

The thus obtained conjugated diene rubber by the method of production of the present invention is the one obtained by carrying out the reaction, in the second step described above, by adding polyorganosiloxane represented by the general formula (1) as a modifying agent at a ratio of 1 mole or more, when converted to the number of repeating units of the siloxane structure (-Si-O-) in polyorganosiloxane, with respect to 1 mole of the polymerization initiator used in the first step, and subsequently carrying out the reaction using the compound represented by the general formula (2) as a modifying agent in the third step described above. For this reason, the conjugated diene rubber obtained by the method of production of the present invention includes those where the modified structure by siloxane and the modified structure by the compound represented by the general formula (2) are introduced at the polymer chain end, but may also be those, other than such a rubber, in which only the modified structure by siloxane is introduced at the polymer chain end. Further, within a range not impairing the effect of the present invention, for example, those in which only the modified structure by the compound represented by the general formula (2) is introduced at the polymer chain end, those in which neither of the modified structures are introduced, etc. may be included. Particularly, in the present invention, from the viewpoint of properly attaining the effect of the present invention, i.e. excellent hot flowability, low heat buildup and wet grip, the ratio of those in which the modified structure by siloxane and the modified structure by the compound represented by the general formula (2) are introduced at the polymer chain end is preferably 10 wt% or more, more preferably 20 wt% or more. Note that the upper limit is not particularly limited.

Further, the coupling rate of the conjugated diene rubber obtained by the method of production of the present invention is not particularly limited, but is preferably 10 wt% or more, more preferably 20 wt% or more, particularly preferably 40 wt% or more, and preferably 80 wt% or less, more preferably 75 wt% or less, particularly preferably 70 wt% or less. When the coupling rate is within the above range, the obtained conjugated diene rubber is more excellent in hot flowability. Note that the coupling rate is the weight percentage of the polymer molecules having a molecular weight of 1.8 times or more of the peak top molecular weight of the conjugated diene polymer chain having an active end before reacted with the polyorganosiloxane represented by the general formula (1) and the compound represented by the general formula (2) as well as a coupling agent and other modifying agents used as necessary to the total amount of the finally obtained conjugated diene rubber. The molecular weight at this time is measured by finding the molecular weight converted to polystyrene by gel permeation chromatography.

Further, the weight average molecular weight (Mw) of the conjugated diene rubber obtained by the method of production of the present invention is, in terms of the value measured by gel permeation chromatography converted to polystyrene, preferably 100,000 to 3,000,000, more preferably 150,000 to 2,000,000, particularly preferably 200,000 to 1,500,000. By making the weight average molecular weight of the conjugated diene rubber within the above range, silica is easily added to the conjugated diene rubber and the processability of the rubber composition can be more enhanced, and further low heat buildup and wet grip of the obtained cross-linked rubber can be more enhanced.

The molecular weight distribution represented by the ratio (Mw/Mn) of the weight average molecular weight (Mw) and the number average molecular weight (Mn) of the conjugated diene rubber obtained by the method of production of the present invention is preferably 1.1 to 3.0, more preferably 1.2 to 2.5, particularly preferably 1.2 to 2.2. By making the molecular weight distribution (Mw/Mn) of the conjugated diene rubber the above range, low heat buildup and wet grip of the obtained cross-linked rubber can be more enhanced.

Further, the Mooney viscosity (ML₁₊₄. 100°C) of the conjugated diene rubber obtained by the method of production of the present invention is preferably 20 to 100, more preferably 30 to 90, particularly preferably 35 to 80. Note that when the conjugated diene rubber is an oil extended rubber, it is preferable that the Mooney viscosity of the oil extended rubber be within the above range.

The conjugated diene rubber obtained by the method of production of the present invention in this way can be suitably used for various applications by adding compounding ingredients such as a filler and cross-linking agent. Particularly, when adding a filler comprised of silica, a rubber composition able to give cross-linked rubber excellent in low heat buildup and wet grip is given.

### <Rubber Composition>

The present invention discloses also a method of production of a rubber composition comprising: producing a conjugated diene rubber by using the method of production according to the present invention, and compounding silica with the conjugated diene rubber, wherein the amount of silica in the rubber composition is 10 to 200 parts by weight with respect to 100 parts by weight of a rubber ingredient containing the conjugated diene rubber in the rubber composition.

As the silica used in the present invention, for example, dry white carbon, wet white carbon, colloidal silica, precipitated silica, etc. may be mentioned. Among these as well, wet white carbon mainly comprised of hydrous silicic acid is preferable. Further, a carbon-silica dual phase filler comprised of carbon black on the surface of which silica is carried may be used. These silicas can be used respectively alone or as two or more types combined. The nitrogen adsorption specific surface area of the silica which is used (measured by BET method based on ASTM D3037-81) is preferably 50 to 300 m²/g, more preferably 80 to 220 m²/g, particularly preferably 100 to 170 m²/g. Further, the pH of the silica is preferably 5 to 10.

The amount of silica used in the present invention is 10 to 200 parts by weight with respect to 100 parts by weight of the rubber ingredients in the rubber composition, preferably 30 to 150 parts by weight, more preferably 50 to 100 parts by weight. By making the amount of the silica the above range, the processability of the rubber composition becomes excellent and the obtained cross-linked rubber becomes more improved in wet grip and low heat buildup.

The rubber composition may further contain a silane coupling agent from the viewpoint of further improvement of low heat buildup. As the silane coupling agent, for example, vinyltriethoxysilane, β-(3,4-epoxycyclohexyl)ethyltrimethoxysilane, N-(β-aminoethyl)-γ-aminopropyltrimethoxysilane, 3-octanoylthio-1-propyl-triethoxysilane, bis(3-(triethoxysilyl)propyl) disulfide, bis(3-(triethoxysilyl)propyl) tetrasulfide, γ-trimethoxysilylpropyldimethylthiocarbamyl tetrasulfide, γ-trimethoxysilylpropylbenzothiazyl tetrasulfide, etc. may be mentioned. These silane coupling agents can be used respectively alone or as two or more types combined. The amount of the silane coupling agent is preferably 0.1 to 30 parts by weight with respect to 100 parts by weight of the silica, more preferably 1 to 15 parts by weight.

Further, the rubber composition may further contain carbon black such as furnace black, acetylene black, thermal black, channel black, and graphite. Among these as well, furnace black is preferable. These carbon blacks can be used respectively alone or as two or more types combined. The amount of the carbon black is usually 120 parts by weight or less with respect to 100 parts by weight of the rubber ingredients in the rubber composition.

The method of adding silica to the rubber ingredient including the conjugated diene rubber obtained by the method of production of the present invention is not particularly limited, but the method of adding it to and kneading it with the solid rubber ingredient (dry kneading method), the method of adding it to a solution containing the conjugated diene rubber and coagulating and drying them (wet kneading method), etc. may be applied.

Further, the rubber composition preferably further contains a cross-linking agent. As the cross-linking agent, for example, sulfur, halogenated sulfur, an organic peroxide, quinone dioximes, organic polyvalent amine compound, an alkylphenol resin having a methylol group, etc. may be mentioned. Among these as well, sulfur is preferably used. The amount of the cross-linking agent is preferably 0.1 to 15 parts by weight with respect to 100 parts by weight of the rubber ingredients in the rubber composition, more preferably 0.5 to 5 parts by weight, particularly preferably 1 to 4 parts by weight.

Further, the rubber composition may have mixed with it, other than the above ingredients, in accordance with ordinary methods, compounding ingredients such as a cross-linking accelerator, cross-linking activator, antiaging agent, filler (except the above-mentioned silica and carbon black), activating agent, process oil, plasticizer, slip agent, tackifier and compatibilizer in respectively required amounts.

When using sulfur or a sulfur-containing compound as a cross-linking agent, jointly using a cross-linking accelerator and cross-linking activator is preferable. As the cross-linking accelerator, for example, a sulfenamide-based cross-linking accelerator; guanidine-based cross-linking accelerator; thiourea-based cross-linking accelerator; thiazole-based cross-linking accelerator; thiuram-based cross-linking accelerator; dithiocarbamic acid-based cross-linking accelerator; xanthic acid-based cross-linking accelerator; etc. may be mentioned. Among these as well, one including a sulfenamide-based cross-linking accelerator is preferable. These cross-linking accelerators may be used respectively alone or as two or more types combined. The amount of cross-linking accelerator is preferably 0.1 to 15 parts by weight with respect to 100 parts by weight of the rubber ingredients in the rubber composition, more preferably 0.5 to 5 parts by weight, particularly preferably 1 to 4 parts by weight.

As the cross-linking activator, for example, higher fatty acids such as stearic acid; zinc oxide; etc. may be mentioned. These cross-linking activators may be used respectively alone or as two types or more combined. The amount of the cross-linking activator is preferably 0.05 to 20 parts by weight with respect to 100 parts by weight of the rubber ingredients in the rubber composition, particularly preferably 0.5 to 15 parts by weight.

Further, the rubber composition may contain other rubber besides the conjugated diene rubber obtained by the above-mentioned method of production of the present invention. As the other rubber, for example, other rubber than the conjugated diene rubber obtained by the above-mentioned method of production of the present invention among rubbers such as natural rubber, polyisoprene rubber, emulsion polymerized styrene-butadiene copolymer rubber, solution polymerized styrene-butadiene copolymer rubber, polybutadiene rubber (high cis-BR or low cis BR, further, polybutadiene rubber containing crystal fibers made of 1,2-polybutadiene polymer also possible), styrene-isoprene copolymer rubber, butadiene-isoprene copolymer rubber, styrene-isoprene-butadiene copolymer rubber, acrylonitrile-butadiene copolymer rubber, and acrylonitrile-styrene-butadiene copolymer rubber may be mentioned. Among these as well, natural rubber, polyisoprene rubber, polybutadiene rubber, and solution polymerized styrene-butadiene copolymer rubber are preferable. These rubbers can be used respectively alone or as two or more types combined.

In the rubber composition the conjugated diene rubber obtained by the method of production of the present invention preferably accounts for 10 to 100 wt% of the rubber ingredients in the rubber composition, particularly preferably accounts for 50 to 100 wt%. In such a case, by the conjugated diene rubber being included in the rubber ingredients, cross-linked rubber more improved in low heat buildup and wet grip can be obtained.

To obtain the rubber composition it is sufficient to knead the ingredients according to an ordinary method. For example, it is possible to knead the ingredients other than thermally unstable ingredients such as cross-linking agent and cross-linking accelerator with the conjugated diene rubber, then mix thermally unstable ingredients such as cross-linking agent and cross-linking accelerator with the kneaded material to obtain the target composition. The kneading temperature of the ingredients other than the thermally unstable ingredients and the conjugated diene rubber is preferably 80 to 200°C, more preferably 120 to 180°C, while the kneading time is preferably 30 seconds to 30 minutes. Further, the kneaded material and thermally unstable ingredients are mixed after cooling them down to usually 100°C or less, preferably 80°C or less.

### <Cross-linked Rubber >

A method of production of a cross-linked rubber comprising: producing a rubber composition by using the method of production according to the present invention, and cross-linking the rubber composition.

The cross-linked rubber may be produced, for example, by shaping the rubber composition by a forming machine corresponding to the desired shape, for example, an extruder, injection molding machine, press, rolls, etc., and heating it for a cross-linking reaction to fix the shape as a cross-linked product. In this case, the product may be cross-linked after shaping it in advance or may be cross-linked simultaneously with shaping. The shaping temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 12 hours, particularly preferably 3 minutes to 6 hours.

Further, depending on the shape, size, etc. of cross-linked rubber, sometimes even if the surface is cross-linked, the inside is not sufficiently cross-linked, so the cross-linked rubber may be further heated for secondary cross-linking.

As the heating method for cross-linking the rubber composition, it is sufficient to suitably select press heating, steam heating, oven heating, hot air heating, and other general methods used for cross-linking rubber.

The thus obtained cross-linked rubber is obtained using the conjugated diene rubber obtained by the above-mentioned method of production of the present invention, so is excellent in low heat buildup and wet grip. The cross-linked rubber, making use of these characteristics, can for example, be used for materials for parts of tires such as cap treads, base treads, carcasses, side walls, and bead parts; materials of industrial products such as hoses, belts, mats, and vibration absorbing rubber; agents for improving the impact resistance of resins; resin film buffer agents; shoe soles; rubber shoes; golf balls; toys; and other various applications. In particular, the cross-linked rubber can be suitably used for various parts of tires such as treads, carcasses, side walls, and beads in various types of tires such as all-season tires, high performance tires, and studless tires and in particular is excellent in low heat buildup property, so can be suitably used as tread of a low fuel consumption. The present invention discloses also a method of production of a tire comprising the use of the method of production of a cross-linked rubber according to the present invention.

### EXAMPLES

Below, the present invention is described in reference to further detailed examples but is not limited thereto. Note that, in below, "parts" is based on weight unless particularly represented otherwise. Additionally, the tests and evaluation were performed by the following methods.

### [Weight Average Molecular Weight, Molecular Weight Distribution, Coupling Rate]

For the weight average molecular weight (Mw), molecular weight distribution (Mw/Mn), and coupling rate, gel permeation chromatography (GPC) was carried out to obtain a chart of molecular weights converted to polystyrene and they were determined based on the obtained chart. The specific measurement conditions of gel permeation chromatography were as follows:
Measurement device: High performance liquid chromatograph (made by Tosoh, product name "HLC-8220")
Column: polystyrene columns made by Tosoh, product name "GMH-HR-H", two connected in series.
Detector: Differential refractometer
Eluent: tetrahydrofuran
Column temperature: 40°C

Note that for the coupling rate, in an elution curve obtained by the gel permeation chromatography under the above conditions, the area ratio of peak parts having a peak top molecular weight of 1.8 times or more of the peak top molecular weight shown by a peak of the smallest molecular weight to the total elution area was made the value of the coupling rate of the conjugated diene polymer chain.

### [Aromatic Vinyl Monomer Unit Content, Vinyl Bond Content]

The aromatic vinyl monomer unit content and vinyl bond content were measured by ¹H-NMR.

### [Hot Flowability (Mutual Adhesion of Coagulated Crumbs)]

The hot flowability was evaluated by measuring about 7 g of bale of conjugated diene rubber for the shear elastic modulus G' at 108°C using Rubber Process Analyzer RPA-2000 (made by Alpha Technologies Ltd.) under conditions of a dynamic stress of 10% and 0.1 Hz. The value of the shear elastic modulus G' in each of Examples 1 to 8 and Comparative Examples 1 to 7 was shown indexed to the measured value in Comparative Example 3 as 100. The value of the shear elastic modulus G' in each of Example 9 and Comparative Example 8 was shown indexed to the measured value in Comparative Example 8 as 100. The value of the shear elastic modulus G' in each of Example 10 and Comparative Example 9 was shown indexed to the measured value in Comparative Example 9 as 100. The value of the shear elastic modulus G' in each of Example 11 and Comparative Example 10 was shown indexed to the measured value in Comparative Example 10 as 100. The larger this index, the less likely the mutual adhesion of coagulated crumbs occurs and the more stable the operability during coagulation.

### [Low Heat Buildup of Cross-Linked Rubber]

The low heat buildup of cross-linked rubber was evaluated by measuring a test piece of a length 50 mm, width 12.7 mm, and thickness 2 mm for the value of tanδ at 60°C using an ARES made by Rheometrics under conditions of a dynamic stress of 2.5% and 10 Hz. The value of the tanδ in each of Examples 1 to 8 and Comparative Examples 1 to 7 was shown indexed to the measured value in Comparative Example 3 as 100. The value of the tanδ in each of Example 9 and Comparative Example 8 was shown indexed to the measured value in Comparative Example 8 as 100. The value of the tanδ in each of Example 10 and Comparative Example 9 was shown indexed to the measured value in Comparative Example 9 as 100. The value of the tanδ in each of Example 11 and Comparative Example 10 was shown indexed to the measured value in Comparative Example 10 as 100. The smaller this index, the better the low heat buildup.

### [Wet Grip of Cross-Linked Rubber]

The wet grip of cross-linked rubber was evaluated by measuring a test piece of a length 50 mm, width 12.7 mm, and thickness 2 mm for the value of tanδ at 0°C using an ARES made by Rheometrics under conditions of a dynamic stress of 0.5% and 10 Hz. The value of the tanδ in each of Examples 1 to 8 and Comparative Examples 1 to 7 was shown indexed to the measured value in Comparative Example 3 as 100. The value of the tanδ in each of Example 9 and Comparative Example 8 was shown indexed to the measured value in Comparative Example 8 as 100. The value of the tanδ in each of Example 10 and Comparative Example 9 was shown indexed to the measured value in Comparative Example 9 as 100. The value of the tanδ in each of Example 11 and Comparative Example 10 was shown indexed to the measured value in Comparative Example 10 as 100. The larger this index, the better the wet grip.

### [Example 1] -according to the present invention-

An autoclave equipped with a stirrer was charged with, in a nitrogen atmosphere, 800 g of cyclohexane, 1.42 mmoles of tetramethylethylenediamine, 87.6 g of 1,3-butadiene and 32.4 g of styrene, 0.79 mmole of n-butyllithium was then added, and polymerization was started at 60°C. The polymerization reaction was continued for 60 minutes, and when the polymerization conversion rate was confirmed to have ranged from 95% to 100%, 0.31 g of the polyorganosiloxane represented by the following formula (8) was added in the state of a xylene solution of a 40 wt% concentration (amount equivalent to 1.3 molar times of n-butyllithium used when converted to the number of repeating units of the siloxane structure (-Si-O-) in polyorganosiloxane) and reacted for 30 minutes. Subsequently, 0.79 mmole of 3-aminopropyltrimethoxysilane (amount equivalent to 1.0 molar time of n-butyllithium used) was added and stirred for 10 minutes. Then, methanol in an amount equivalent to 2 molar times of n-butyllithium used was added as a polymerization terminator to obtain a solution containing a conjugated diene rubber. With respect to 100 parts of the conjugated diene rubber, 0.15 parts of Irganox 1520 L (made by Ciba Specialty Chemicals) was added to the solution as an antiaging agent, then steam stripping was performed to remove the solvent and remainder was dried in vacuo at 60°C for 24 hours to obtain a solid conjugated diene rubber. The obtained conjugated diene rubber of Example 1 had a weight average molecular weight (Mw) of 482,000, a coupling rate of 57.9%, a styrene monomer unit content of 27.3 wt% and a vinyl bond content of 60.0 wt%. Further, the obtained conjugated diene rubber of Example 1 was measured for the hot flowability in accordance with the above method. The results are shown in Table 1. 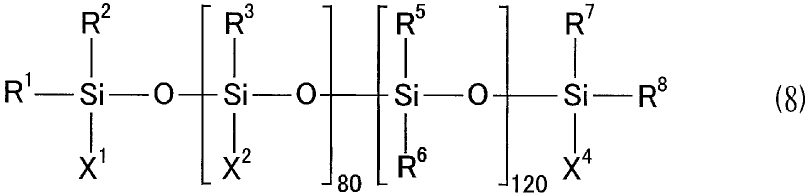 X² :

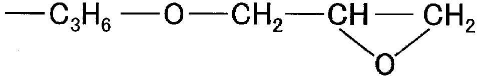

X¹, X⁴, R¹~R³, R⁵~R⁸ : -CH₃

### [Example 2] -according to the present invention-

Except for changing the amount of addition of the polyorganosiloxane represented by the above formula (8) to 0.26 g (amount equivalent to 1.1 molar times of n-butyllithium used when converted to the number of repeating units of the siloxane structure (-Si-O-) in polyorganosiloxane), the same procedure was followed as in Example 1 to obtain a solid conjugated diene rubber. The obtained conjugated diene rubber of Example 2 had a weight average molecular weight (Mw) of 469,000, a coupling rate of 55.0%, a styrene monomer unit content of 27.2 wt% and a vinyl bond content of 59.3 wt%. Further, the obtained conjugated diene rubber of Example 2 was measured for the hot flowability in accordance with the above method. The results are shown in Table 1.

### [Example 3] -according to the present invention-

Except for using 0.79 mmole of 3-(2-aminoethylamino)propyltrimethoxysilane (amount equivalent to 1.0 molar times of n-butyllithium used) instead of 0.79 mmole of 3-aminopropyltrimethoxysilane, the same procedure was followed as in Example 2 to obtain a solid conjugated diene rubber. The obtained conjugated diene rubber of Example 3 had a weight average molecular weight (Mw) of 467,000, a coupling rate of 54.4%, a styrene monomer unit content of 26.9 wt% and a vinyl bond content of 58.5 wt%. Further, the obtained conjugated diene rubber of Example 3 was measured for the hot flowability in accordance with the above method. The results are shown in Table 1.

### [Example 4] -according to the present invention-

50.0 g of cyclohexane and 0.66 mmole of tetramethylethylenediamine were added to a nitrogen-purged 100 ml ampoule bottle, and 6.6 mmole of n-butyllithium was further added. Subsequently, 11.61 g of isoprene and 0.87 g of styrene were added slowly to react in the ampoule bottle at 50°C for 120 minutes, whereby a polymer block (A) having an active end was obtained. This polymer block (A) had a weight average molecular weight (Mw) of 3,500, a molecular weight distribution (Mw/Mn) of 1.10, a styrene monomer unit content of 7.0 wt%, an isoprene monomer unit content of 93.0 wt%, and a vinyl bond content of 7.7 wt%.

Next, an autoclave equipped with a stirrer was charged with, in a nitrogen atmosphere, 4000 g of cyclohexane, 11.1 mmoles of tetramethylethylenediamine, 393.0 g of 1,3-butadiene, and 207.0 g of styrene, subsequently the total amount of polymer block (A) having an active end obtained above was added, and the polymerization was started at 40°C. An elapse of 10 minutes of the initiation of polymerization, 337.0 g of 1,3-butadiene and 63.0 g of styrene were continuously added over a period of 40 minutes. The maximum temperature during the polymerization reaction was 60°C. After the continuous addition was completed, the polymerization reaction was further continued for 20 minutes, and when the polymerization conversion rate was confirmed to have ranged from 95% to 100%, 2.13 g of the polyorganosiloxane represented by the above formula (8) was added in the state of a xylene solution of a 40 wt% concentration (amount equivalent to 1.1 molar times of n-butyllithium used when converted to the number of repeating units of the siloxane structure (-Si-O-) in polyorganosiloxane) and reacted for 30 minutes. Subsequently, 6.6 mmoles of 3-aminopropyltrimethoxysilane (amount equivalent to 1.0 molar time of n-butyllithium used) was added and stirred for 10 minutes. Then, methanol in an amount equivalent to 2 molar times of n-butyllithium used was added as a polymerization terminator to obtain a solution containing a conjugated diene rubber. With respect to 100 parts of the conjugated diene rubber, 0.15 parts of Irganox 1520 L (made by Ciba Specialty Chemicals) was added to the solution as an antiaging agent, then steam stripping was performed to remove the solvent and remainder was dried in vacuo at 60°C for 24 hours to obtain a solid conjugated diene rubber. The obtained conjugated diene rubber of Example 4 had a weight average molecular weight (Mw) of 494,000, a coupling rate of 60.8%, a styrene monomer unit content of 26.5 wt% and a vinyl bond content of 59.0 wt%. Further, the obtained conjugated diene rubber of Example 4 was measured for the hot flowability in accordance with the above method. The results are shown in Table 1.

### [Example 5] -according to the present invention-

Except for using 6.6 mmoles of 3-(2-aminoethylamino)propyltrimethoxysilane (amount equivalent to 1.0 molar times of n-butyllithium used) instead of 6.6 mmoles of 3-aminopropyltrimethoxysilane, the same procedure was followed as in Example 4 to obtain a solid conjugated diene rubber. The obtained conjugated diene rubber of Example 5 had a weight average molecular weight (Mw) of 488,000, a coupling rate of 60.2%, a styrene monomer unit content of 26.6 wt% and a vinyl bond content of 60.4 wt%. Further, the obtained conjugated diene rubber of Example 5 was measured for the hot flowability in accordance with the above method. The results are shown in Table 1.

### [Example 6] -according to the present invention-

An autoclave equipped with a stirrer was charged with, in a nitrogen atmosphere, 800 g of cyclohexane, 1.42 mmoles of tetramethylethylenediamine, 0.71 mmole of di-N-hexylamine, 87.6 g of 1,3-butadiene, and 32.4 g of styrene, and subsequently 0.79 mmole of n-butyllithium, and the polymerization was started at 60°C. The polymerization reaction was continued for 60 minutes, and when the polymerization conversion rate was confirmed to have ranged from 95% to 100%, 0.26 g (amount equivalent to 1.1 molar times of n-butyllithium used when converted to the number of repeating units of the siloxane structure (-Si-O-) in polyorganosiloxane) of the polyorganosiloxane represented by the above formula (8) was added in the state of a xylene solution of a 40 wt% concentration and reacted for 30 minutes. Subsequently, 0.79 mmole of 3-aminopropyltrimethoxysilane (amount equivalent to 1.0 molar time of n-butyllithium (di-N-hexylaminolithium) used) was added and stirred for 10 minutes. Then, methanol in an amount equivalent to 2 molar times of n-butyllithium used was added as a polymerization terminator to obtain a solution containing a conjugated diene rubber. With respect to 100 parts of the conjugated diene rubber, 0.15 parts of Irganox 1520 L (made by Ciba Specialty Chemicals) was added to the solution as an antiaging agent, then steam stripping was performed to remove the solvent and remainder was dried in vacuo at 60°C for 24 hours to obtain a solid conjugated diene rubber. The obtained conjugated diene rubber of Example 6 had a weight average molecular weight (Mw) of 484,000, a coupling rate of 58.8%, a styrene monomer unit content of 27.1 wt% and a vinyl bond content of 59.1 wt%. Further, the obtained conjugated diene rubber of Example 6 was measured for the hot flowability in accordance with the above method. The results are shown in Table 1.

### [Example 7] -not according to the present invention-

Except for using 0.79 mmole of N,N-bis(triethylsilyl)aminopropyltrimethoxysilane (amount equivalent to 1.0 molar times of n-butyllithium used) instead of 0.79 mmole of 3-aminopropyltrimethoxysilane, the same procedure was followed as in Example 2 to obtain a solid conjugated diene rubber. The obtained conjugated diene rubber of Example 7 had a weight average molecular weight (Mw) of 464,000, a coupling rate of 53.8%, a styrene monomer unit content of 27.0 wt% and a vinyl bond content of 59.5 wt%. Further, the obtained conjugated diene rubber of Example 7 was measured for the hot flowability in accordance with the above method. The results are shown in Table 1.

### [Example 8] -not according to the present invention-

Except for using 0.79 mmole of 3-diethylaminopropyltrimethoxysilane (amount equivalent to 1.0 molar times of n-butyllithium used) instead of 0.79 mmole of 3-aminopropyltrimethoxysilane, the same procedure was followed as in Example 2 to obtain a solid conjugated diene rubber. The obtained conjugated diene rubber of Example 8 had a weight average molecular weight (Mw) of 465,000, a coupling rate of 54.0%, a styrene monomer unit content of 27.5 wt% and a vinyl bond content of 59.8 wt%. Further, the obtained conjugated diene rubber of Example 8 was measured for the hot flowability in accordance with the above method. The results are shown in Table 1.

### [Comparative Example 1]

Except for changing the amount of addition of the polyorganosiloxane represented by the above formula (8) to 0.16 g (amount equivalent to 0.7 molar times of n-butyllithium used when converted to the number of repeating units of the siloxane structure (-Si-O-) in polyorganosiloxane), the same procedure was followed as in Example 1 to obtain a solid conjugated diene rubber. The obtained conjugated diene rubber of Comparative Example 1 had a weight average molecular weight (Mw) of 383,000, a coupling rate of 34.4%, a styrene monomer unit content of 26.6 wt% and a vinyl bond content of 58.5 wt%. Further, the obtained conjugated diene rubber of Comparative Example 1 was measured for the hot flowability in accordance with the above method. The results are shown in Table 1.

### [Comparative Example 2]

Except for changing the amount of addition of the polyorganosiloxane represented by the above formula (8) to 0.09 g (amount equivalent to 0.4 molar times of n-butyllithium used when converted to the number of repeating units of the siloxane structure (-Si-O-) in polyorganosiloxane), the same procedure was followed as in Example 1 to obtain a solid conjugated diene rubber. The obtained conjugated diene rubber of Comparative Example 2 had a weight average molecular weight (Mw) of 286,000, a coupling rate of 11.4%, a styrene monomer unit content of 26.9 wt% and a vinyl bond content of 57.2 wt%. Further, the obtained conjugated diene rubber of Comparative Example 2 was measured for the hot flowability in accordance with the above method. The results are shown in Table 1.

### [Comparative Example 3]

Except for not adding 3-aminopropyltrimethoxysilane, the same procedure was followed as in Example 2 to obtain a solid conjugated diene rubber. The obtained conjugated diene rubber of Comparative Example 3 had a weight average molecular weight (Mw) of 460,000, a coupling rate of 52.5%, a styrene monomer unit content of 27.6 wt% and a vinyl bond content of 58.8 wt%. Further, the obtained conjugated diene rubber of Comparative Example 3 was measured for the hot flowability in accordance with the above method. The results are shown in Table 1.

### [Comparative Example 4]

Except for using 0.87 mmole of hexamethylcyclotrisiloxane (amount equivalent to 1.1 molar times of n-butyllithium used) instead of the polyorganosiloxane represented by the above formula (8), the same procedure was followed as in Example 2 to obtain a solid conjugated diene rubber. The obtained conjugated diene rubber of Comparative Example 4 had a weight average molecular weight (Mw) of 323,000, a coupling rate of 20.5%, a styrene monomer unit content of 27.0 wt% and a vinyl bond content of 59.8 wt%. Further, the obtained conjugated diene rubber of Comparative Example 4 was measured for the hot flowability in accordance with the above method. The results are shown in Table 1.

### [Comparative Example 5]

Except for not adding 3-aminopropyltrimethoxysilane, the same procedure was followed as in Comparative Example 4 to obtain a solid conjugated diene rubber. The obtained conjugated diene rubber of Comparative Example 5 had a weight average molecular weight (Mw) of 265,000, a coupling rate of 8.4%, a styrene monomer unit content of 27.3 wt% and a vinyl bond content of 58.7 wt%. Further, the obtained conjugated diene rubber of Comparative Example 5 was measured for the hot flowability in accordance with the above method. The results are shown in Table 1.

### [Comparative Example 6]

Except for using 0.87 mmole of N,N-bis(triethylsilyl)aminopropyltrimethoxysilane (amount equivalent to 1.1 molar times of n-butyllithium used) instead of the polyorganosiloxane represented by the above formula (8), the same procedure was followed as in Example 2 to obtain a solid conjugated diene rubber. The obtained conjugated diene rubber of Comparative Example 6 had a weight average molecular weight (Mw) of 383,000, a coupling rate of 36.5%, a styrene monomer unit content of 26.7 wt% and a vinyl bond content of 58.0 wt%. Further, the obtained conjugated diene rubber of Comparative Example 6 was measured for the hot flowability in accordance with the above method. The results are shown in Table 1.

### [Comparative Example 7]

Except for not adding 3-aminopropyltrimethoxysilane, the same procedure was followed as in Comparative Example 6 to obtain a solid conjugated diene rubber. The obtained conjugated diene rubber of Comparative Example 7 had a weight average molecular weight (Mw) of 377,000, a coupling rate of 34.5%, a styrene monomer unit content of 27.5 wt% and a vinyl bond content of 60.3 wt%. Further, the obtained conjugated diene rubber of Comparative Example 7 was measured for the hot flowability in accordance with the above method. The results are shown in Table 1.

### [Production and Evaluation of Rubber Composition and Cross-Linked Rubber]

In a 250 ml Brabender type mixer, 100 parts of the conjugated diene rubber of Example 1 was masticated for 30 seconds, next 50 parts of silica (made by Rhodia, product name "Zeosil 1115MP"), 20 parts of process oil (made by JXTG Nippon Oil & Energy Corporation, product name "Aromax T-DAE"), and 6.0 parts of the silane coupling agent bis(3-(triethoxysilyl)propyl)tetrasulfide (made by Degussa, product name "Si69") were added and kneaded at a starting temperature of 110°C for 1.5 minutes, then 25 parts of silica (made by Rhodia, product name "Zeosil 1115MP"), 3 parts of zinc oxide, 2 parts of stearic acid, and 2 parts of an antiaging agent N-phenyl-N'-(1,3-dimethylbutyl)-p-phenylene diamine (made by Ouchi Shinko Chemical Industrial, product name "Nocrac 6C") were added and the mixture was further kneaded for 2.5 minutes, then the kneaded material was discharged from the mixer. The temperature of the kneaded material after the end of kneading was 150°C. The kneaded material was cooled down to room temperature, then kneaded again in a Brabender mixer at a starting temperature of 110°C for 2 minutes, and subsequently discharged from the mixer. Next, using open rolls at 50°C, to the obtained kneaded material, 1.4 parts of sulfur, and a cross-linking accelerator: a mixture of 1.2 parts of N-tert-butyl-2-benzothiazolylsulfenamide (product name "Noccelar NS-P", made by Ouchi Shinko Chemical Industrial) and 1.2 parts of 1,3-diphenylguanidine (made by Ouchi Shinko Chemical Industrial, product name "Noccelar D") were added and kneaded, and then a sheet-shaped rubber composition was taken out. This rubber composition was pressed to cross-link at 160°C for 20 minutes to prepare a test piece of a cross-linked rubber, and this test piece was evaluated for wet grip and low heat buildup.

Further, the conjugated diene rubbers of Examples 2 to 8, and Comparative Examples 1 to 7 were respectively similarly processed to prepare rubber compositions and test pieces of cross-linked rubbers, and these test pieces were evaluated for low heat buildup and wet grip in accordance with the above method. The results are shown in Table 1.

### [Table 1]

**Table 1**

| | | | Examples | | | | | | | | Comparative Examples | | | | | | |
|---|---|---|---|---|---|---|---|---|---|---|---|---|---|---|---|---|---|
| | | | 1* | 2* | 3* | 4* | 5* | 6* | 7⁺ | 8⁺ | 1 | 2 | 3 | 4 | 5 | 6 | 7 |
| Polymer block (A) formation at polymerization initiation end | | | None | None | None | Present | Present | None | None | None | None | None | None | None | None | None | None |
| Polymerization initiator | Normal butyllithium | (molar part) | 1 | 1 | 1 | 1 | 1 | - | 1 | 1 | 1 | 1 | 1 | 1 | 1 | 1 | 1 |
| | Dihexylaminolithium | (molar part) | - | - | - | - | - | 1 | - | - | - | - | - | - | - | - | - |
| Modification of first stage | Polyorganosiloxane | (molar part) | 1.3 | 1.1 | 1.1 | 1.1 | 1.1 | 1.1 | 1.1 | 1.1 | 0.7 | 0.4 | 1.1 | - | - | - | - |
| | Hexamethylcyclotrisiloxane | (molar part) | - | - | - | - | - | - | - | - | - | - | - | 1.1 | 1.1 | - | - |
| | N, N-bis(triethylsilyl)aminopropyltrimethoxysilane | (molar part) | - | - | - | - | - | - | - | - | - | - | - | - | - | 1.1 | 1.1 |
| Modification of second stage | 3-Aminopropyltrimethoxysilane | (molar part) | 1 | 1 | - | 1 | - | 1 | - | - | 1 | 1 | - | 1 | - | 1 | - |
| | 3-(2-aminoethylamino)propyltrimethoxysilane | (molar part) | - | - | 1 | - | 1 | - | - | - | - | - | - | - | - | - | - |
| | N,N-bis(triethylsilyl)aminopropyltrimethoxysilane | (molar part) | - | - | - | - | - | - | 1 | - | - | - | - | - | - | - | - |
| | 3-Diethylaminopropyltrimethoxysilane | (molar part) | - | - | - | - | - | - | - | 1 | - | - | - | - | - | - | - |
| Evaluation | Hot flowability | | 120 | 106 | 105 | 130 | 128 | 124 | 103 | 104 | 49 | 22 | 100 | 29 | 19 | 55 | 51 |
| | Low heat buildup | | 79 | 80 | 78 | 70 | 69 | 72 | 85 | 89 | 133 | 180 | 100 | 98 | 108 | 86 | 92 |
| | Wet grip | | 111 | 109 | 111 | 111 | 113 | 111 | 105 | 103 | 93 | 88 | 100 | 101 | 97 | 105 | 103 |

| | | | | | | | | | | | | | | | | | |
|---|---|---|---|---|---|---|---|---|---|---|---|---|---|---|---|---|---|
| + Not according to the present invention * According to the present invention | | | | | | | | | | | | | | | | | |

In Table 1, the amount of addition of each component is shown as an amount relative to the amount of addition of the polymerization initiator which is set to 1 molar part.

As will be revealed from Table 1, the conjugated diene rubbers (Examples 1 to 8) obtained by the method of production of a conjugated diene rubber and in particular in the methods of Examples 1 to 6, which are according to the present invention, were superior in hot flowability (resistance to mutual adhesion of coagulated crumbs) and in wet grip and low heat buildup of the obtained cross-linked rubbers to the conjugated diene rubber (Comparative Example 3) which had been modified by the polyorganosiloxane represented by the general formula (1), but had not been further modified by the compound represented by the general formula (2). In particular, the effect was remarkable when a modifying agent containing a primary amino group having an active hydrogen atom and/or a secondary amino group having an active hydrogen atom was used as a modifying agent of the second stage.

On the other hand, the conjugated diene rubbers in which the amount of use of the polyorganosiloxane represented by the general formula (1) was less than 1 mole were all poor in hot flowability (resistance to mutual adhesion of coagulated crumbs), and the obtained cross-linked rubbers were all poor in wet grip and low heat buildup (Comparative Examples 1 and 2).

Further, the conjugated diene rubbers using a modifying agent other than the polyorganosiloxane represented by the general formula (1) were all poor in hot flowability (resistance to mutual adhesion of coagulated crumbs) (Comparative Examples 4 to 7).

### [Example 9] -according to the present invention-

70.0 g of cyclohexane and 0.77 mmole of tetramethylethylenediamine were added to a nitrogen-purged 800 ml ampoule bottle, and 7.69 mmoles (amount equivalent to 0.10 moles of tetramethylethylenediamine as a polar compound with respect to 1 mole of n-butyllithium) of n-butyllithium was further added. Subsequently, 27.9 g of isoprene and 2.1 g of styrene were added slowly to react in the ampoule bottle at 50°C for 120 minutes, whereby a polymer block (A) having an active end was obtained. This polymer block (A) had a weight average molecular weight (Mw) of 6,500, a molecular weight distribution (Mw/Mn) of 1.10, a styrene monomer unit content of 7.0 wt%, an isoprene monomer unit content of 93.0 wt% and a vinyl bond content of 7.7 wt%.

An autoclave equipped with a stirrer was charged with, in a nitrogen atmosphere, 4000 g of cyclohexane, 2.69 mmoles of tetramethylethylenediamine, 474 g of 1,3-butadiene, and 126 g of styrene, subsequently the total amount of polymer block (A) having an active end obtained above was added, and the polymerization was started at 50°C (the amount of tetramethylethylenediamine as a polar compound existing in the reaction system with respect 1 mole of n-butyllithium used is 0.45 moles). An elapse of 10 minutes of the initiation of polymerization, 376 g of 1,3-butadiene and 24 g of styrene were continuously added over a period of 60 minutes. The maximum temperature during the polymerization reaction was 75°C. After the continuous addition was completed, the polymerization reaction was further continued for 10 minutes, and when the polymerization conversion rate was confirmed to have ranged from 95% to 100%, 2.44 g of the polyorganosiloxane represented by the above formula (8) was added in the state of a xylene solution of a 40 wt% concentration (amount equivalent to 1.1 molar times of n-butyllithium used when converted to the number of repeating units of the siloxane structure (-Si-O-) in polyorganosiloxane) and reacted for 30 minutes. Subsequently, 7.69 mmoles of 3-(2-aminoethylamino)propyltrimethoxysilane (amount equivalent to 1.0 molar time of n-butyllithium used) was added and reacted for 10 minutes. Then, methanol in an amount equivalent to 2 molar times of n-butyllithium used was added as a polymerization terminator to obtain a solution containing a conjugated diene rubber. With respect to 100 parts of the conjugated diene rubber, 0.15 parts of Irganox 1520 L (made by BASF) was added to the solution as an antiaging agent, then steam stripping was performed to remove the solvent and remainder was dried in vacuo at 60°C for 24 hours to obtain a solid conjugated diene rubber. The obtained conjugated diene rubber of Example 9 had a weight average molecular weight (Mw) of 460,000, a coupling rate of 58.0%, a styrene monomer unit content of 15.0 wt% and a vinyl bond content of 30.5 wt%. Further, the obtained conjugated diene rubber of Example 9 was measured for the hot flowability in accordance with the above method. The results are shown in Table 2.

### [Comparative Example 8]

Except for not adding 7.69 mmoles of 3-(2-aminoethylamino)propyltrimethoxysilane, the same procedure was followed as in Example 9 to obtain a solid conjugated diene rubber. The obtained conjugated diene rubber of Comparative Example 8 had a weight average molecular weight (Mw) of 450,000, a coupling rate of 56.8%, a styrene monomer unit content of 15.0 wt% and a vinyl bond content of 30.0 wt%. Further, the obtained conjugated diene rubber of Comparative Example 8 was measured for the hot flowability in accordance with the above method. The results are shown in Table 2.

### [Production and Evaluation of Rubber Composition and Cross-Linked Rubber]

In a 250 ml Brabender type mixer, 70 parts of the conjugated diene rubber obtained in Example 9 and 30 parts of butadiene rubber (made by Zeon Corporation, product name "Nipol BR1220") were masticated for 30 seconds, next 66.7 parts of silica (made by Evonic, product name "Ultrasil 7000GR"), 11.3 parts of process oil (made by JXTG Nippon Oil & Energy Corporation, product name "Aromax T-DAE"), and 7.2 parts of the silane coupling agent bis(3-(triethoxysilyl)propyl)tetrasulfide (made by Evonic, product name "Si69") were added and kneaded at a starting temperature of 110°C for 1.5 minutes, then 23.3 parts of silica (made by Evonic, product name "Ultrasil 7000GR"), 10 parts of carbon black (made by Tokai Carbon Co., Ltd., product name "SEAST 7HM"), 10 parts of process oil (made by JXTG Nippon Oil & Energy Corporation, product name "Aromax T-DAE"), 3 parts of zinc oxide, 2 parts of stearic acid, and 2 parts of an antiaging agent N-phenyl-N'-(1,3-dimethylbutyl)-p-phenylene diamine (made by Ouchi Shinko Chemical Industrial, product name "Nocrac 6C") were added and the mixture was further kneaded for 2.5 minutes, then the kneaded material was discharged from the mixer. The temperature of the kneaded material after the end of kneading was 150°C. The kneaded material was cooled down to room temperature, then kneaded again in a Brabender mixer at a starting temperature of 110°C for 2 minutes, and subsequently discharged from the mixer. Next, using open rolls at 50°C, to the obtained kneaded material, 1.7 parts of sulfur, and a mixture of 1.8 parts of a cross-linking accelerator N-tert-butyl-2-benzothiazolylsulfenamide (made by Ouchi Shinko Chemical Industrial, product name "Noccelar NS-P") and 1.7 parts of a cross-linking accelerator 1,3-diphenylguanidine (made by Ouchi Shinko Chemical Industrial, product name "Noccelar D") were added, the mixture was kneaded, and then a sheet-shaped rubber composition was taken out. This rubber composition was pressed to cross-link at 160°C for 20 minutes to prepare a test piece of a cross-linked rubber, and this test piece was evaluated for low heat buildup and wet grip. The results are shown in Table 2.

Further, the conjugated diene rubber of Comparative Example 8 was similarly processed to prepare a rubber composition and a test piece of a cross-linked rubber, and the test piece was evaluated for low heat buildup and wet grip in accordance with the above method. The results are shown in Table 2.

### [Table 2]

**Table 2**

| | | | | Example | Comparative Example |
|---|---|---|---|---|---|
| | | | | 9* | 8 |
| Modified conjugated diene rubber | Polymer block (A) formation at polymerization initiation end | | | Present | Present |
| | Polymerization initiator | Normal butyllithium | (molar part) | 1 | 1 |
| | | Dihexylaminolithium | (molar part) | - | - |
| | Modification of first stage | Polyorganosiloxane | (molar part) | 1.1 | 1.1 |
| | | Hexamethylcyclotrisiloxane | (molar part) | - | - |
| | | N,N-bis(triethylsilyl)aminopropyltrimethoxysilane | (molar part) | - | - |
| | Modification of second stage | 3-Aminopropyltrimethoxysilane | (molar part) | - | - |
| | | 3-(2-aminoethylamino)propyltrimethoxysilane | (molar part) | 1 | - |
| | | N,N-bis(triethylsilyl)aminopropyltrimethoxysilane | (molar part) | - | - |
| | | 3-Diethylaminopropyltrimethoxysilane | (molar part) | - | - |
| Cross-linked rubber | Modified conjugated diene rubber (styrene monomer unit content 15 wt%): butadiene rubber | | | 70:30 | 70:30 |
| Evaluation | Hot flowability | | | 102 | 100 |
| | Low heat buildup | | | 96 | 100 |
| | Wet grip | | | 105 | 100 |

| | | | | | |
|---|---|---|---|---|---|
| * According to the present invention | | | | | |

In Table 2, the amount of addition of each component is shown as an amount relative to the amount of addition of the polymerization initiator which is set to 1 molar part.

### [Example 10] -according to the present invention-

74.3 g of cyclohexane and 0.48 mmole of tetramethylethylenediamine were added to a nitrogen-purged 800 ml ampoule bottle, and 4.76 mmoles (amount equivalent to 0.10 moles of tetramethylethylenediamine as a polar compound with respect to 1 mole of n-butyllithium) of n-butyllithium was further added. Subsequently, 17.3 g of isoprene and 1.3 g of styrene were added slowly to react in the ampoule bottle at 50°C for 120 minutes, whereby a polymer block (A) having an active end was obtained. This polymer block (A) had a weight average molecular weight (Mw) of 6,500, a molecular weight distribution (Mw/Mn) of 1.12, a styrene monomer unit content of 7.0%, an isoprene monomer unit content of 93.0 wt% and a vinyl bond content of 7.5 wt%.

An autoclave equipped with a stirrer was charged with, in a nitrogen atmosphere, 4000 g of cyclohexane, 3.57 mmoles of tetramethylethylenediamine, 252 g of 1,3-butadiene, and 348 g of styrene, subsequently the total amount of polymer block (A) having an active end obtained above was added, and the polymerization was started at 50°C (the amount of tetramethylethylenediamine as a polar compound existing in the reaction system with respect 1 mole of n-butyllithium used is 0.85 moles). An elapse of 15 minutes of the initiation of polymerization, 338 g of 1,3-butadiene and 62 g of styrene were continuously added over a period of 60 minutes. The maximum temperature during the polymerization reaction was 70°C. After the continuous addition was completed, the polymerization reaction was further continued for 15 minutes, and when the polymerization conversion rate was confirmed to have ranged from 95% to 100%, 1.51 g of the polyorganosiloxane represented by the above formula (8) was added in the state of a xylene solution of a 40 wt% concentration (amount equivalent to 1.1 molar times of n-butyllithium used when converted to the number of repeating units of the siloxane structure (-Si-O-) in polyorganosiloxane) and reacted for 30 minutes. Subsequently, 4.76 mmoles of 3-(2-aminoethylamino)propyltrimethoxysilane (amount equivalent to 1.0 molar time of n-butyllithium used) was added and reacted for 10 minutes. Then, methanol in an amount equivalent to 2 molar times of n-butyllithium used was added as a polymerization terminator to obtain a solution containing a conjugated diene rubber. With respect to 100 parts of the conjugated diene rubber, 0.15 parts of Irganox 1520 L (made by BASF) was added to the solution as an antiaging agent, then steam stripping was performed to remove the solvent and remainder was dried in vacuo at 60°C for 24 hours to obtain a solid conjugated diene rubber. The obtained conjugated diene rubber of Example 10 had a weight average molecular weight (Mw) of 570,000, a coupling rate of 45.0%, a styrene monomer unit content of 41.1 wt% and a vinyl bond content of 33.5 wt%. Further, the obtained conjugated diene rubber of Example 10 was measured for the hot flowability in accordance with the above method. The results are shown in Table 3.

### [Comparative Example 9]

Except for not adding 4.76 mmoles of 3-(2-aminoethylamino)propyltrimethoxysilane, the same procedure was followed as in Example 10 to obtain a solid conjugated diene rubber. The obtained conjugated diene rubber of Comparative Example 9 had a weight average molecular weight (Mw) of 552,000, a coupling rate of 43.0%, a styrene monomer unit content of 41.0 wt% and a vinyl bond content of 33.0 wt%. Further, the obtained conjugated diene rubber of Comparative Example 9 was measured for the hot flowability in accordance with the above method. The results are shown in Table 3.

### [Production and Evaluation of Rubber Composition and Cross-Linked Rubber]

In a 250 ml Brabender type mixer, 70 parts of the conjugated diene rubber obtained in Example 10 and 30 parts of butadiene rubber (made by Zeon Corporation, product name "Nipol BR1220") were masticated for 30 seconds, next 50.0 parts of silica (made by Rhodia, product name "Zeosil 1165MP"), 27.5 parts of process oil (made by JXTG Nippon Oil & Energy Corporation, product name "Aromax T-DAE"), and 6.0 parts of the silane coupling agent bis(3-(triethoxysilyl)propyl)tetrasulfide (made by Evonic, product name "Si69") were added and kneaded at a starting temperature of 110°C for 1.5 minutes, then 25.0 parts of silica (made by Rhodia, product name "Zeosil 1165MP"), 3 parts of zinc oxide, 2 parts of stearic acid, and 2 parts of an antiaging agent N-phenyl-N'-(1,3-dimethylbutyl)-p-phenylene diamine (made by Ouchi Shinko Chemical Industrial, product name "Nocrac 6C") were added and the mixture was further kneaded for 2.5 minutes, then the kneaded material was discharged from the mixer. The temperature of the kneaded material after the end of kneading was 150°C. The kneaded material was cooled down to room temperature, then kneaded again in a Brabender mixer at a starting temperature of 110°C for 2 minutes, and subsequently discharged from the mixer. Next, using open rolls at 50°C, to the obtained kneaded material, 1.5 parts of sulfur, and a mixture of 1.8 parts of a cross-linking accelerator N-tert-butyl-2-benzothiazolylsulfenamide (made by Ouchi Shinko Chemical Industrial, product name "Noccelar NS-P") and 1.5 parts of a cross-linking accelerator 1,3-diphenylguanidine (made by Ouchi Shinko Chemical Industrial, product name "Noccelar D") were added, the mixture was kneaded, and then a sheet-shaped rubber composition was taken out. This rubber composition was pressed to cross-link at 160°C for 20 minutes to prepare a test piece of a cross-linked rubber, and this test piece was evaluated for wet grip and low heat buildup. The results are shown in Table 3.

Further, the conjugated diene rubber of Comparative Example 9 was similarly processed to prepare a rubber composition and a test piece of a cross-linked rubber, and the test piece was evaluated for low heat buildup and wet grip in accordance with the above method. The results are shown in Table 3.

### [Table 3]

**Table 3**

| | | | | Example | Comparative Example |
|---|---|---|---|---|---|
| | | | | 10* | 9 |
| Modified conjugated diene rubber | Polymer block (A) formation at polymerization initiation end | | | Present | Present |
| | Polymerization initiator | Normal butyllithium | (molar part) | 1 | 1 |
| | | Dihexylaminolithium | (molar part) | - | - |
| | Modification of first stage | Polyorganosiloxane | (molar part) | 1.1 | 1.1 |
| | | Hexamethylcyclotrisiloxane | (molar part) | - | - |
| | | N,N-bis(triethylsilyl)aminopropyltrimethoxysilane | (molar part) | - | - |
| | Modification of second stage | 3-Aminopropyltrimethoxysilane | (molar part) | - | - |
| | | 3-(2-aminoethylamino)propyltrimethoxysilane | (molar part) | 1 | - |
| | | N,N-bis(triethylsilyl)aminopropyltrimethoxysilane | (molar part) | - | - |
| | | 3-Diethylaminopropyltrimethoxysilane | (molar part) | - | - |
| Cross-linked rubber | Modified conjugated diene rubber (styrene monomer unit content 41 wt%): butadiene rubber | | | 70:30 | 70:30 |
| Evaluation | Hot flowability | | | 103 | 100 |
| | Low heat buildup | | | 87 | 100 |
| | Wet grip | | | 113 | 100 |

| | | | | | |
|---|---|---|---|---|---|
| * According to the present invention | | | | | |

In Table 3, the amount of addition of each component is shown as an amount relative to the amount of addition of the polymerization initiator which is set to 1 molar part.

### [Example 11] -according to the present invention-

An autoclave equipped with a stirrer was charged with, in a nitrogen atmosphere, 800 g of cyclohexane, and 120 g of 1,3-butadiene, subsequently 1.00 mmole of n-butyllithium was added, and the polymerization was started at 80°C. The polymerization reaction was continued for 90 minutes, and when the polymerization conversion rate was confirmed to have ranged from 95% to 100%, 0.32 g of the polyorganosiloxane represented by the above formula (8) was added (amount equivalent to 1.1 molar times of n-butyllithium used when converted to the number of repeating units of the siloxane structure (-Si-O-) in polyorganosiloxane) and reacted for 30 minutes. Subsequently, 1.00 mmole of 3-(2-aminoethylamino)propyltrimethoxysilane (amount equivalent to 1.0 molar time of n-butyllithium used) was added and reacted for 10 minutes. Then, methanol in an amount equivalent to 2 molar times of n-butyllithium used was added as a polymerization terminator to obtain a solution containing a conjugated diene rubber. With respect to 100 parts of the conjugated diene rubber, 0.15 parts of Irganox 1520 L (made by BASF) was added to the solution as an antiaging agent, then steam stripping was performed to remove the solvent and remainder was dried in vacuo at 60°C for 24 hours to obtain a solid conjugated diene rubber. The obtained conjugated diene rubber of Example 11 had a weight average molecular weight (Mw) of 485,000, a coupling rate of 55.5% and a vinyl bond content of 9.8 wt%. Further, the obtained conjugated diene rubber of Example 11 was measured for the hot flowability in accordance with the above method. The results are shown in Table 4.

### [Comparative Example 10]

Except for not adding 1.00 mmole of 3-(2-aminoethylamino)propyltrimethoxysilane, the same procedure was followed as in Example 11 to obtain a solid conjugated diene rubber. The obtained conjugated diene rubber of Comparative Example 10 had a weight average molecular weight (Mw) of 460,000, a coupling rate of 54.0% and a vinyl bond content of 9.1 wt%. Further, the obtained conjugated diene rubber of Comparative Example 10 was measured for the hot flowability in accordance with the above method. The results are shown in Table 4.

### [Production and Evaluation of Rubber Composition and Cross-Linked Rubber]

In a 250 ml Banbury mixer, 70 parts of the conjugated diene rubber of Example 11 and 30 parts of natural rubber were masticated for 30 seconds, next 30 parts of silica (made by Rhodia, product name "Zeosil 1115MP"), and 2.4 parts of the silane coupling agent bis(3-(triethoxysilyl) propyl) tetrasulfide (made by Evonic, product name "Si69") were added and kneaded at a starting temperature of 80°C for 1.5 minutes, then 10 parts of silica (made by Rhodia, product name "Zeosil 1115MP"), 10 parts of carbon black (made by Tokai Carbon Co., Ltd., product name "SEAST SO"), 5 parts of process oil (made by JXTG Nippon Oil & Energy Corporation, product name "Aromax T-DAE"), 2 parts of zinc oxide, 2 parts of stearic acid, 2 parts of an antiaging agent (made by Ouchi Shinko Chemical Industrial, product name "Nocrac 6C"), and 1 part of paraffin wax were added and the mixture was kneaded for 2.5 minutes, then the kneaded material was discharged from the Banbury mixer. The temperature of the kneaded material after the end of kneading was 150°C. The kneaded material was cooled down to room temperature, then kneaded again in a Banbury mixer for 3 minutes, and subsequently discharged from the Banbury mixer. Next, using open rolls at 50°C, to the obtained kneaded material, 1.5 parts of sulfur and 1.3 parts of a cross-linking accelerator [a mixture of 0.9 parts of N-tert-butyl-2-benzothiazolylsulfenamide (made by Ouchi Shinko Chemical Industrial, product name "Noccelar NS-P") and 0.4 parts of 1,3-diphenylguanidine (made by Ouchi Shinko Chemical Industrial, product name "Noccelar D")] were added, the mixture was kneaded, and then a sheet-shaped rubber composition was taken out. This rubber composition was pressed to cross-link at 150°C for 20 minutes to prepare a test piece of a cross-linked rubber, and this test piece was evaluated for low heat buildup and wet grip in accordance with the above method.

Further, the conjugated diene rubber of Comparative Example 10 was similarly processed to prepare a rubber composition and a test piece of a cross-linked rubber, and the test piece was evaluated for low heat buildup and wet grip in accordance with the above method. The results are shown in Table 4.

### [Table 4]

**Table 4**

| | | | | Example | Comparative Example |
|---|---|---|---|---|---|
| | | | | 11* | 10 |
| Modified conjugated diene rubber | Polymer block (A) formation at polymerization initiation end | | | None | None |
| | Polymerization initiator | Normal butyllithium | (molar part) | 1 | 1 |
| | | Dihexylaminolithium | (molar part) | - | - |
| | Modification of first stage | Polyorganosiloxane | (molar part) | 1.1 | 1.1 |
| | | Hexamethylcyclotrisiloxane | (molar part) | - | - |
| | | N,N-bis(triethylsilyl)aminopropyltrimethoxysilane | (molar part) | - | - |
| | Modification of second stage | 3-Aminopropyltrimethoxysilane | (molar part) | - | - |
| | | 3-(2-aminoethylamino)propyltrimethoxysilane | (molar part) | 1 | - |
| | | N,N-bis(triethylsilyl)aminopropyltrimethoxysilane | (molar part) | - | - |
| | | 3-Diethylaminopropyltrimethoxysilane | (molar part) | - | - |
| Cross-linked rubber | Modified conjugated diene rubber (styrene monomer unit content 0 wt%): natural rubber | | | 70:30 | 70:30 |
| Evaluation | Hot flowability | | | 102 | 100 |
| | Low heat buildup | | | 90 | 100 |
| | Wet grip | | | 101 | 100 |

| | | | | | |
|---|---|---|---|---|---|
| * According to the present invention | | | | | |

In Table 4, the amount of addition of each component is shown as an amount relative to the amount of addition of the polymerization initiator which is set to 1 molar part.

As will be revealed from Tables 2 to 4, the conjugated diene rubbers (Examples 9 to 11) obtained by the method of production of a conjugated diene rubber of the present invention were excellent in hot flowability (resistance to mutual adhesion of coagulated crumbs) and in wet grip and low heat buildup of the obtained cross-linked rubbers even when other rubbers were blended.

## Claims

1. A method of production of a conjugated diene rubber comprising
a first step of polymerizing a monomer containing a conjugated diene compound in an inert solvent using a polymerization initiator so as to obtain a conjugated diene polymer chain having an active end,
a second step of reacting polyorganosiloxane represented by the following general formula (1) with the conjugated diene polymer chain having an active end by adding the polyorganosiloxane at a ratio of 1 mole or more, when converted to the number of repeating units of the siloxane structure (-Si-O-) in the polyorganosiloxane, with respect to 1 mole of the polymerization initiator used in the first step, and
a third step of reacting a compound represented by the following general formula (2) with the conjugated diene polymer chain with which polyorganosiloxane was reacted obtained in the second step: 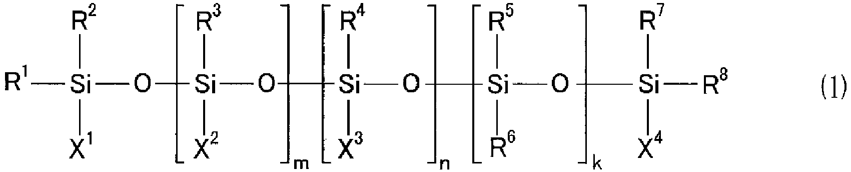
wherein, in the general formula (1), R¹ to R⁸ are an alkyl group having 1 to 6 carbon atoms, or an aryl group having 6 to 12 carbon atoms, these may be the same or may be different from each other; X¹ and X⁴ are any group selected from the group consisting of an alkyl group having 1 to 6 carbon atoms, aryl group having 6 to 12 carbon atoms, alkoxy group having 1 to 5 carbon atoms, and epoxy-group containing group having 4 to 12 carbon atoms, these may be the same or may be different from each other; X² is an epoxy-group containing group having 4 to 12 carbon atoms, and when there are a plural number of X², they may be the same or may be different from each other; X³ is a group containing 2 to 20 repeating units of alkylene glycol, and when there are a plural number of X³, they may be the same or may be different from each other; "m" is an integer of 3 to 200, "n" is an integer of 0 to 200, "k" is an integer of 0 to 200, and m+n+k is 3 or more:
(A¹)₃-Si-A² (2)
wherein, in the general formula (2), A¹ is a group represented by -OR¹⁰, wherein R¹⁰ is a hydrogen atom or a hydrocarbyl group, A² is a group containing a primary amino group having two active hydrogen atoms; and
wherein the polymerization initiator is at least one compound selected from the group consisting of an organic alkali metal compound, an organic alkali earth metal compound, and a polymerization initiator having a lanthanide-series metal compound as a primary catalyst.

2. The method of production of a conjugated diene rubber according to claim 1, wherein an organic alkali metal amide compound is used as the polymerization initiator.

3. The method of production of a conjugated diene rubber according to claim 2, wherein the organic alkali metal amide compound is a compound represented by the following general formula (3): 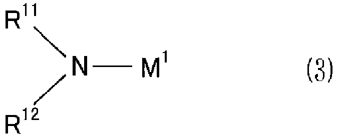 wherein, in the general formula (3), M¹ represents an alkali metal atom, R¹¹ and R¹² respectively independently represent an alkyl group, cycloalkyl group, aryl group, aralkyl group, a protecting group for amino group, or a group which produces a hydroxyl group when hydrolyzed, R¹¹ and R¹² may bond with each other to form a ring structure together with the nitrogen atom to which they are bound, when forming the ring structure they may form a ring structure together with a hetero atom other than the nitrogen atom to which they are bound in addition to the nitrogen atom to which they are bound.

4. The method of production of a conjugated diene rubber according to any one of claims 1 to 3,
wherein the first step comprises:
a step of polymerizing a monomer containing isoprene, or isoprene and an aromatic vinyl compound, in an inert solvent using a polymerization initiator so as to form a polymer block (A) having an active end and containing 80 to 100 wt% of an isoprene monomer unit and 0 to 20 wt% of an aromatic vinyl monomer unit, and
a step of mixing the polymer block (A) having an active end and a monomer containing 1,3-butadiene, or 1,3-butadiene and an aromatic vinyl compound, to continue polymerization reaction, and forming a polymer block (B) having an active end and containing 50 to 100 wt% of a 1,3-butadiene monomer unit and 0 to 50 wt% of an aromatic vinyl monomer unit in series with the polymer block (A) so as to obtain a conjugated diene polymer chain having an active end.

5. A method of production of a rubber composition comprising:
producing a conjugated diene rubber by using the method of production according to any one of claims 1 to 4, and
compounding silica with the conjugated diene rubber,
wherein the amount of silica in the rubber composition is 10 to 200 parts by weight with respect to 100 parts by weight of a rubber ingredient containing the conjugated diene rubber in the rubber composition.

6. The method of production of a rubber composition according to claim 5, comprising:
compounding silica and a cross-linking agent with the conjugated diene rubber.

7. A method of production of a cross-linked rubber comprising:
producing a rubber composition by using the method of production according to claim 6, and
cross-linking the rubber composition.

8. A method of production of a tire comprising using the method of production according to claim 7.

## Patentansprüche

1. Verfahren zur Herstellung eines konjugierten Dien-Kautschuks, umfassend
einen ersten Schritt des Polymerisierens eines eine konjugierte Dien-Verbindung enthaltenden Monomers in einem inerten Lösungsmittel unter Verwendung eines Polymerisationsinitiators, um eine konjugierte Dien-Polymerkette mit einem aktiven Ende zu erhalten,
einen zweiten Schritt des Umsetzens eines durch die folgende allgemeine Formel (1) dargestellten Polyorganosiloxans mit der konjugierten Dien-Polymerkette mit einem aktiven Ende durch Hinzufügen des Polyorganosiloxans in einem Verhältnis von 1 Mol oder mehr, umgerechnet auf die Anzahl der Wiederholungseinheiten der Siloxanstruktur (-Si-O-) im Polyorganosiloxan, bezogen auf 1 Mol des im ersten Schritt verwendeten Polymerisationsinitiators, und
einen dritten Schritt des Umsetzens einer Verbindung der folgenden allgemeinen Formel (2) mit der im zweiten Schritt erhaltenen konjugierten Dien-Polymerkette, mit der das Polyorganosiloxan umgesetzt wurde: 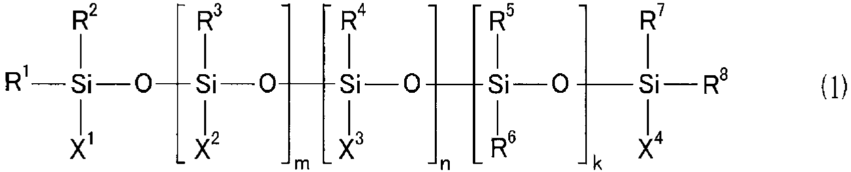
wobei in der allgemeinen Formel (1) R¹ bis R⁸ eine Alkylgruppe mit 1 bis 6 Kohlenstoffatomen oder eine Arylgruppe mit 6 bis 12 Kohlenstoffatomen sind, diese können gleich oder voneinander verschieden sein; X¹ und X⁴ beliebige Gruppen sind, ausgewählt aus der Gruppe bestehend aus einer Alkylgruppe mit 1 bis 6 Kohlenstoffatomen, einer Arylgruppe mit 6 bis 12 Kohlenstoffatomen, einer Alkoxygruppe mit 1 bis 5 Kohlenstoffatomen und einer Epoxygruppe enthaltenden Gruppe mit 4 bis 12 Kohlenstoffatomen, diese können gleich oder voneinander verschieden sein; X² eine Epoxygruppe enthaltende Gruppe mit 4 bis 12 Kohlenstoffatomen ist, und wenn mehrere X² vorhanden sind, können diese gleich oder voneinander verschieden sein; X³ eine Gruppe ist, die 2 bis 20 sich wiederholende Alkylenglykoleinheiten enthält, und wenn mehrere X³ vorhanden sind, können diese gleich oder voneinander verschieden sein; "m" eine ganze Zahl von 3 bis 200 ist, "n" eine ganze Zahl von 0 bis 200 ist, "k" eine ganze Zahl von 0 bis 200 ist, und m+n+k 3 oder mehr ist:
(A¹)₃-Si-A² (2)
wobei in der allgemeinen Formel (2) A¹ eine durch -OR¹⁰ dargestellte Gruppe ist, wobei R¹⁰ ein Wasserstoffatom oder eine Kohlenwasserstoffgruppe ist, und A² eine Gruppe ist, die eine primäre Aminogruppe mit zwei aktiven Wasserstoffatomen enthält; und
wobei der Polymerisationsinitiator mindestens eine Verbindung ist, ausgewählt aus der Gruppe bestehend aus einer organischen Alkalimetallverbindung, einer organischen Erdalkalimetallverbindung und einem Polymerisationsinitiator mit einer Lanthanid-Metallverbindung als Primärkatalysator.

2. Verfahren zur Herstellung eines konjugierten Dien-Kautschuks gemäß Anspruch 1, wobei eine organische Alkalimetallamidverbindung als Polymerisationsinitiator verwendet wird.

3. Verfahren zur Herstellung eines konjugierten Dien-Kautschuks gemäß Anspruch 2, wobei die organische Alkalimetallamidverbindung eine Verbindung ist, die durch die folgende allgemeine Formel (3) dargestellt wird: 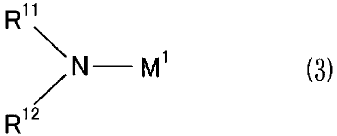 wobei in der allgemeinen Formel (3) M¹ ein Alkalimetallatom darstellt, R¹¹ und R¹² jeweils unabhängig voneinander eine Alkylgruppe, eine Cycloalkylgruppe, eine Arylgruppe, eine Aralkylgruppe, eine Schutzgruppe für eine Aminogruppe oder eine Gruppe darstellen, die bei Hydrolyse eine Hydroxylgruppe bildet, R¹¹ und R¹² sich miteinander verbinden können, um zusammen mit dem Stickstoffatom, an das sie gebunden sind, eine Ringstruktur zu bilden, bei der Bildung der Ringstruktur können sie eine Ringstruktur zusammen mit einem anderen Heteroatom bilden als dem Stickstoffatom, an das sie gebunden sind, zusätzlich zu dem Stickstoffatom, an das sie gebunden sind.

4. Verfahren zur Herstellung eines konjugierten Dien-Kautschuks gemäß einem der Ansprüche 1 bis 3,
wobei der erste Schritt umfasst:
einen Schritt des Polymerisierens eines Monomers, das Isopren oder Isopren und eine aromatische Vinylverbindung enthält, in einem inerten Lösungsmittel unter Verwendung eines Polymerisationsinitiators, um einen Polymerblock (A) mit einem aktiven Ende zu bilden, der 80 bis 100 Gew.-% einer Isoprenmonomereinheit und 0 bis 20 Gew.-% einer aromatischen Vinylmonomereinheit enthält, und
einen Schritt des Mischens des Polymerblocks (A) mit einem aktiven Ende und eines Monomers, das 1,3-Butadien oder 1,3-Butadien und eine aromatische Vinylverbindung enthält, um die Polymerisationsreaktion fortzusetzen, und des Bildens eines Polymerblocks (B) mit einem aktiven Ende, der 50 bis 100 Gew.-% einer 1,3-Butadien-Monomereinheit und 0 bis 50 Gew.-% einer aromatischen Vinylmonomereinheit enthält, in Reihe mit dem Polymerblock (A), um eine konjugierte Dien-Polymerkette mit einem aktiven Ende zu erhalten.

5. Verfahren zur Herstellung einer
Kautschukzusammensetzung, umfassend:
Herstellung eines konjugierten Dien-Kautschuks unter Verwendung des Herstellungsverfahrens gemäß einem der Ansprüche 1 bis 4 und
das Vermischen von Siliciumdioxid mit dem konjugierten Dien-Kautschuk,
wobei die Menge an Siliciumdioxid in der Kautschukzusammensetzung 10 bis 200 Gewichtsteile beträgt, bezogen auf 100 Gewichtsteile eines den konjugierten Dien-Kautschuk enthaltenden Kautschukbestandteils in der Kautschukzusammensetzung.

6. Verfahren zur Herstellung einer Kautschukzusammensetzung nach Anspruch 5, umfassend:
das Vermischen von Siliciumdioxid und einem Vernetzungsmittel mit dem konjugierten Dien-Kautschuk.

7. Verfahren zur Herstellung eines vernetzten Kautschuks, umfassend:
Herstellung einer Kautschukzusammensetzung unter Verwendung des Herstellungsverfahrens gemäß Anspruch 6 und
Vernetzen der Kautschukzusammensetzung.

8. Verfahren zur Herstellung eines Reifens, umfassend
die Verwendung des Herstellungsverfahrens gemäß Anspruch 7.

## Revendications

1. Procédé de production d'un caoutchouc à diène conjugué comprenant
une première étape consistant à polymériser un monomère contenant un composé de diène conjugué dans un solvant inerte à l'aide d'un
amorceur de polymérisation de manière à obtenir une chaîne polymère à diène conjugué ayant une extrémité active,
une deuxième étape consistant à faire réagir un polyorganosiloxane représenté par la formule générale suivante (1) avec la chaîne polymère à diène conjugué ayant une extrémité active en ajoutant le
polyorganosiloxane à un rapport de 1 mole ou plus, lorsqu'il est converti en nombre d'unités répétitives de la structure siloxane (-Si-O-) dans le polyorganosiloxane, par rapport à 1 mole de l'amorceur de polymérisation utilisé lors de la première étape, et
une troisième étape consistant à faire réagir un composé représenté par la
formule générale suivante (2) avec la chaîne polymère à diène conjugué avec laquelle le polyorganosiloxane a été fait réagir obtenue lors de la deuxième étape : 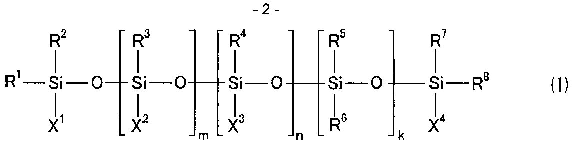
lequel, dans la formule générale (1), R¹ à R⁸ représentent un groupe alkyle ayant de 1 à 6 atomes de carbone, ou un groupe aryle ayant de 6 à 12 atomes de carbone, ceux-ci pouvant être identiques ou différents les uns des autres ; X¹ et X⁴ représentent chacun un groupe choisi dans le groupe constitué d'un groupe alkyle ayant de 1 à 6 atomes de carbone, d'un groupe aryle ayant de 6 à 12 atomes de carbone, d'un groupe alkoxy ayant de 1 à 5 atomes de carbone, et d'un groupe contenant un groupe époxy ayant de 4 à 12 atomes de carbone, ceux-ci pouvant être identiques ou différents les uns des autres ; X² représente un groupe contenant un groupe époxy ayant de 4 à 12 atomes de carbone, et lorsqu'il y a plusieurs X², ceux-ci peuvent être identiques ou différents les uns des autres ; X³ représente un groupe contenant de 2 à 20 unités répétitives de glycol alkylène, et lorsqu'il y a plusieurs X³, ceux-ci peuvent être identiques ou différents les uns des autres ; « m » est un entier de 3 à 200, « n » est un entier de 0 à 200, « k » est un entier de 0 à 200, et m+n+k est supérieur ou égal à 3 :
(A¹)₃ - Si - A² (2)
lequel, dans la formule générale (2), A¹ est un groupe représenté par -OR¹⁰, dans lequel R¹⁰ est un atome d'hydrogène ou un groupe hydrocarbyle, A² est un groupe contenant un groupe amino primaire ayant deux atomes d'hydrogène actifs ; et
lequel l'amorceur de polymérisation est au moins un composé choisi dans le groupe constitué d'un composé organique de métal alcalin, d'un composé organique de métal alcalino-terreux, et d'un amorceur de polymérisation ayant un composé métallique de la série des lanthanides comme catalyseur principal.

2. Procédé de production d'un caoutchouc à diène conjugué selon la revendication 1, lequel un composé organique d'amide de métal alcalin est utilisé comme amorceur de polymérisation.

3. Procédé de production d'un caoutchouc à diène conjugué selon la revendication 2, lequel le composé organique d'amide de métal alcalin est un composé représenté par la formule générale suivante (3) : 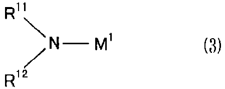 lequel, dans la formule générale (3), M¹ représente un atome de métal alcalin, R¹¹ et R¹² représentent respectivement et indépendamment un groupe alkyle, un groupe cycloalkyle, un groupe aryle, un groupe aralkyle, un groupe protecteur pour groupe amino, ou un groupe qui produit un groupe hydroxyle lors de l'hydrolyse, R¹¹ et R¹² pouvant être liés l'un à l'autre pour former une structure cyclique avec l'atome d'azote auquel ils sont liés, lors de la formation de la structure cyclique ils peuvent former une structure cyclique avec un hétéroatome autre que l'atome d'azote auquel ils sont liés en plus de l'atome d'azote auquel ils sont liés.

4. Procédé de production d'un caoutchouc à diène conjugué selon l'une quelconque des revendications 1 à 3,
lequel la première étape comprend :
une étape consistant à polymériser un monomère contenant de l'isoprène, ou de l'isoprène et un composé vinylique aromatique, dans un solvant inerte à l'aide d'un amorceur de polymérisation de manière à former un bloc polymère (A) ayant une extrémité active et contenant 80 à 100 % en poids d'une unité monomère d'isoprène et 0 à 20 % en poids d'une unité monomère vinylique aromatique, et
une étape consistant à mélanger le bloc polymère (A) ayant une extrémité active et un monomère contenant du 1,3-butadiène, ou du 1,3-butadiène et un composé vinylique aromatique, pour poursuivre la réaction de polymérisation, et
former un bloc polymère (B) ayant une extrémité active et contenant 50 à 100 % en poids d'une unité monomère de 1,3-butadiène et 0 à 50 % en poids d'une unité monomère vinylique aromatique en série avec le bloc polymère (A) de manière à obtenir une chaîne polymère à diène conjugué ayant une extrémité active.

5. Procédé de production d'une composition de caoutchouc comprenant :
produire un caoutchouc à diène conjugué en utilisant le procédé de production selon l'une quelconque des revendications 1 à 4, et
incorporer de la silice avec le caoutchouc à diène conjugué,
lequel la quantité de silice dans la composition de caoutchouc est de 10 à 200 parties en poids par rapport à 100 parties en poids d'un ingrédient de caoutchouc contenant le caoutchouc à diène conjugué dans la composition de caoutchouc.

6. Procédé de production d'une composition de caoutchouc selon la revendication 5, comprenant :
incorporer de la silice et un agent de réticulation avec le caoutchouc à diène conjugué.

7. Procédé de production d'un caoutchouc réticulé comprenant :
produire une composition de caoutchouc en utilisant le procédé de production selon la revendication 6, et
réticuler la composition de caoutchouc.

8. Procédé de production d'un pneumatique comprenant l'utilisation du procédé de production selon la revendication 7.
